# EUROPEAN PATENT APPLICATION

(11) **EP 4 801 167 A1**
(43) Date of publication of application: **02.09.2026**
(21) Application number: 23960173.5
(22) Date of filing: 29.11.2023
(51) Int. Cl.: H04W 72/23, H04W 56/00

(54) **NETWORK NODE, USER DEVICE, AND COMMUNICATION METHOD**

(71) Applicant: Kyocera Corporation, Kyoto-shi, Kyoto 612-8501 (JP)
(72) Inventor: FUJISHIRO, Masato, Kyoto-shi, Kyoto 612-8501 (JP); ZENKYU, Ryuji, Kyoto-shi, Kyoto 612-8501 (JP)
(74) Representative: Viering, Jentschura & Partner mbB Patent- und Rechtsanwälte
(86) International application number: PCT/JP2023/042829
(87) International publication number: WO 2025/115155

(57) **Abstract**

A network node according to an aspect is a network node that manages a cell in a mobile communication system. The network node includes a controller configured to configure a plurality of synchronization signal blocks that can simultaneously be transmitted at different frequencies within a band of the cell, as synchronization signal blocks that differ depending on type, and a transmitter configured to transmit configuration information indicating the configuration.

## Description

### TECHNICAL FIELD

The present disclosure relates to a network node, a user equipment, and a communication method.

### BACKGROUND OF INVENTION

In the Third Generation Partnership Project (3GPP) (registered trademark; the same applies hereinafter), which is a standardization project for mobile communication systems, an Uncrewed Aerial Vehicle (UAV) has been discussed (for example, Non-Patent Document 1). UAVs are also referred to as drones. UAVs are aircraft without a human pilot on board and have an autonomous flight ability. UAVs can also be controlled by UAV controllers that control the UAVs. A combination of a UAV and UAV controller is referred to as an Uncrewed Aerial System (UAS). Through these specifications, in the 3GPP, it is possible to appropriately support communications with UAVs flying in the sky.

On the other hand, network nodes (for example, base stations) transmit synchronization signal blocks (SSB: Synchronization Signal/Physical Broadcast Channel Block) using beamforming. Beamforming is technology for transmitting or receiving radio waves in a specific direction. In particular, 5th Generation (5G), which is a 3GPP technical specification, can use higher frequency bands than 4th Generation (4G), and thus a radio wave transmission direction is narrowed to compensate for a propagation loss with a beam gain. A user equipment also uses SSBs for a cell search. Cell search is a procedure in which a user equipment acquires time and frequency synchronization with a cell and detects a cell ID (PCI: Physical Cell ID) of the cell. A user equipment performs a cell search based on a primary synchronization signal, a secondary synchronization signal, and a demodulation reference signal (DMRS) of a PBCH in SSBs.

In order to transmit SSBs throughout the entire coverage area of a cell, a network node performs beam sweeping for switching a transmission beam direction of the SSBs (also referred to as a "beamforming pattern") at predetermined time intervals. By beam sweeping, the network node transmits SSBs within an SS burst in different transmission beam directions in a time-division manner. Thereby, the SSBs within the SS burst can be transmitted throughout the entire coverage area of the cell. The SS burst is specified to be set within a predetermined time length (specifically, a time of a half frame).

### CITATION LIST

### NON-PATENT LITERATURE

Non-Patent Document 1: 3GPP TS 22.125 V18.0.0 (2023-9)
Non-Patent Document 2: 3GPP TS 38.300 V17.6.0 (2023-9)

### SUMMARY

In a network node, it is assumed that a coverage area of a cell is located in a terrestrial area. For this reason, a fixed range of the terrestrial area is included in a coverage range by one or a plurality of network nodes in the coverage area on the ground. Thereby, optimization of the terrestrial area is achieved with regard to the coverage area.

However, in the network nodes, an aerial area is not necessarily assumed as their coverage area, and the aerial area is not necessarily optimized as a coverage area of a cell.

For this reason, a UAV located in the aerial area may not be able to efficiently perform a cell search using SSBs transmitted from network nodes. A user equipment that is present in a terrestrial area may also not be able to efficiently perform a cell search.

The present disclosure provides a network node which enables a user equipment to efficiently perform a cell search, the user equipment, and a communication method. The present disclosure also provides a network node which achieves a reduction in power consumption in a user equipment, the user equipment, and a communication method.

A network node according to a first aspect is a network node that manages a cell in a mobile communication system. The network node includes a controller configured to configure a plurality of synchronization signal blocks that can simultaneously be transmitted at different frequencies within a band of the cell, as synchronization signal blocks that differ depending on type, and a transmitter configured to transmit configuration information indicating the configuration.

A user equipment according to a second aspect is a user equipment that performs wireless communication with a network node that manages a cell in a mobile communication system. The user equipment includes a receiver configured to receive, from the network node, configuration information for configuring a plurality of synchronization signal blocks that can simultaneously be transmitted at different frequencies within a band of the cell, as synchronization signal blocks that differ depending on type.

A communication method according to a third aspect is a communication method used by a network node that manages a cell in a mobile communication system. The communication method includes configuring a plurality of synchronization signal blocks that can simultaneously be transmitted at different frequencies within a band of the cell, as synchronization signal blocks that differ depending on type, and transmitting configuration information indicating the configuration.

A communication method according to a fourth aspect is a communication method used by a user equipment that performs wireless communication with a network node that manages a cell in a mobile communication system. The communication method includes receiving, from the network node, configuration information for configuring a plurality of synchronization signal blocks that can simultaneously be transmitted at different frequencies within a band of the cell, as synchronization signal blocks that differ depending on type.

### BRIEF DESCRIPTION OF THE DRAWINGS

FIG. 1 is a diagram illustrating a configuration example of a mobile communication system according to a first embodiment.
FIG. 2 is a diagram illustrating a configuration example of a protocol stack for a user plane according to the first embodiment.
FIG. 3 is a diagram illustrating a configuration example of a protocol stack for a control plane according to the first embodiment.
FIG. 4 is a diagram illustrating a configuration example of a base station (network node) according to the first embodiment.
FIG. 5 is a diagram illustrating a configuration example of a user equipment (UE) according to the first embodiment.
FIG. 6 is a diagram illustrating an overview of SSBs, beam sweeping, and a cell search according to the first embodiment.
FIG. 7 is a diagram illustrating an overview of SSBs, beam sweeping, and a cell search according to the first embodiment.
FIG. 8 is a diagram illustrating OffsetToPointA and Kssb (ssb-SubcarrierOffset) according to the first embodiment.
FIGs. 9(A) to 9(E) are diagrams illustrating an example of an SSB transmission operation according to the first embodiment.
FIGs. 10(A) to 10(E) are diagrams illustrating an example of an SSB transmission operation according to the first embodiment.
FIGs. 11(A) to 11(E) are diagrams illustrating an example of an SSB transmission operation according to the first embodiment.
FIGs. 12(A) to 12(E) are diagrams illustrating an example of an SSB transmission operation according to the first embodiment.
FIGs. 13(A) to 13(E) are diagrams illustrating an example of an SSB transmission operation according to the first embodiment.
FIG. 14(A) is a diagram illustrating an example of operations according to the first embodiment.
FIG. 15 is a diagram illustrating an example of a method of setting frequency-multiplexed SSBs according to the first embodiment.
FIGs. 16(A) to 16(E) are diagrams illustrating an example of an SSB transmission operation according to a second embodiment.
FIG. 17 is a diagram illustrating an example of operations according to the second embodiment.
FIG. 18 is a diagram illustrating a scenario according to a third embodiment.
FIGs. 19(A) to 19(E) are diagrams illustrating an example of an SSB transmission operation according to the third embodiment.
FIG. 20 is a diagram illustrating an example of operations according to the third embodiment.
FIGs. 21(A) to 21(E) are diagrams illustrating an example of an SSB transmission operation according to a fourth embodiment.
FIGs. 22(A) to 22(E) are diagrams illustrating an example of an SSB transmission operation according to the fourth embodiment.

### DESCRIPTION OF EMBODIMENTS

A mobile communication system according to an embodiment will be described with reference to the drawings. In the description of the drawings, the same or similar parts are denoted by the same or similar reference signs.

### First Embodiment

### (1) Configuration Example of Mobile Communication System

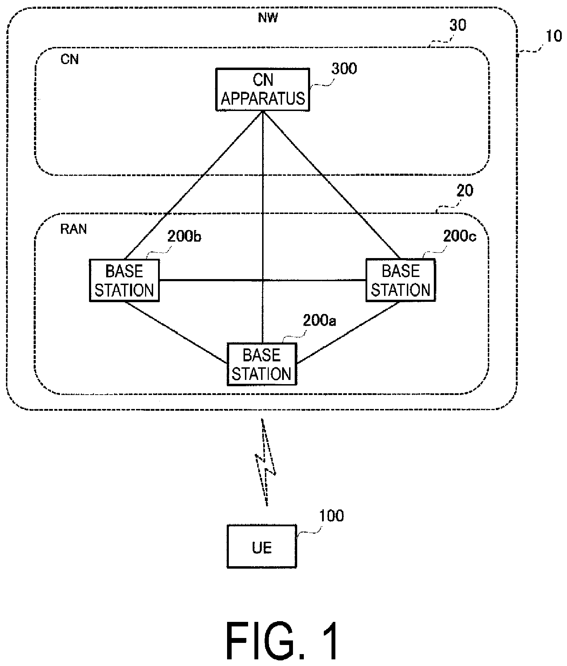

FIG. 1 is a diagram illustrating a configuration example of a mobile communication system according to an embodiment. The mobile communication system according to the embodiment is a system conforming to the 3GPP standard. For example, the mobile communication system according to the present embodiment may be a 5th generation (5G) system or a 6th generation (6G) system.

The mobile communication system includes a network (NW) 10 and a user equipment (UE) 100. The UE 100 is a mobile communication apparatus and performs wireless communication with the NW 10. The UE 100 may be an apparatus used by a user and may be, for example, a mobile phone terminal (including a smartphone), a tablet terminal, a laptop personal computer (PC), a communication module (including a communication card or chipset), a sensor or an apparatus provided in a sensor, a vehicle or an apparatus provided in a vehicle (a vehicle UE), or an aircraft or an apparatus provided in an aircraft (an aerial UE).

The NW 10 includes a Radio Access Network (RAN) 20 and a Core Network (CN) 30. When the mobile communication system is a 5th Generation System (5GS), the RAN 20 is referred to as a Next Generation Radio Access Network (NG-RAN) and the CN 30 is referred to as a 5G Core Network (5GC).

The RAN 20 includes a plurality of base stations 200 (base stations 200a to 200c in the example illustrated in the drawing). The base stations 200 are connected to each other via an inter-base station interface. The base station 200 is an example of a network node. The base station 200 may be configured with a central unit (CU) and a distributed unit (DU) (that is, functionally divided), and the two units may be connected to each other via a fronthaul interface. When the mobile communication system is a 5GS, the base station 200 is referred to as a gNB, the inter-base station interface is referred to as an Xn interface, and the fronthaul interface is referred to as an F1 interface.

Each base station 200 manages one cell or a plurality of cells. The base station 200 performs wireless communication with UEs 100 that have established a connection with their own cell. Each base station 200 has a Radio Resource Management (RRM) function, a routing function for user data (also simply referred to as "data"), a measurement control function for mobility control and scheduling, and the like. A "cell" is used as a term indicating a minimum unit of a wireless communication area. The "cell" is also used as a term representing a function or a resource for performing wireless communication with the UE 100. One cell belongs to one carrier frequency. One cell may be associated with one downlink component carrier and one uplink component carrier. A bandwidth corresponding to one cell (system bandwidth) may be divided into a plurality of bandwidth parts (BWPs).

The CN 30 includes a CN apparatus 300. The CN apparatus 300 may include a control plane (C-plane) apparatus associated with the C-plane, and a user plane (U-plane) apparatus associated with the U-plane. The C-plane apparatus performs various mobility controls, paging, and the like for the UE 100. The C-plane apparatus communicates with the UE 100 using Non-Access Stratum (NAS) signaling. The U-plane apparatus controls data transfer. When the mobile communication system is a 5GS, the C-plane apparatus is referred to as an Access and Mobility Management Function (AMF), the U-plane apparatus is referred to as a User Plane Function (UPF), and the interface between the base station 200 and the CN apparatus 300 is referred to as an NG interface.

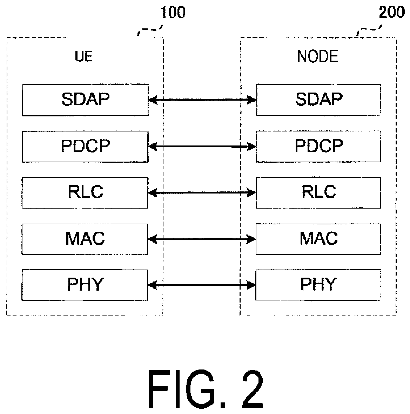

FIG. 2 is a diagram illustrating a configuration example of a protocol stack of a U-plane radio interface that handles data.

The protocol of the U-plane radio interface includes, for example, a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the base station 200 via a physical channel. The PHY layer of the UE 100 receives Downlink Control Information (DCI) transmitted from the base station 200 on a Physical Downlink Control Channel (PDCCH). Specifically, the UE 100 performs blind decoding of the PDCCH by using a radio network temporary identifier (RNTI) and acquires a successfully decoded DCI as a DCI addressed to the UE. The DCI transmitted from the base station 200 has CRC parity bits scrambled by the RNTI added thereto.

The MAC layer performs data priority control and retransmission processing using Hybrid ARQ (HARQ), and the like. Data and control information are transmitted between the MAC layer of the UE 100 and the MAC layer of the base station 200 via a transport channel. The MAC layer of the base station 200 includes a scheduler. The scheduler determines the uplink and downlink transport format (a transport block size and a Modulation and Coding Scheme (MCS)) and the resources to be allocated to the UE 100.

The RLC layer transmits data to the RLC layer on the reception side by using functions of the MAC layer and the PHY layer. Data and control information are transmitted between the RLC layer of the UE 100 and the RLC layer of the base station 200 via a logical channel.

The PDCP layer performs header compression/decompression, encryption/decryption, and the like.

The SDAP layer performs mapping between an IP flow, which is a unit for QoS control by the CN 30, and a radio bearer, which is a unit for QoS control by an Access Stratum (AS). When the CN 30 performs QoS control in the same units as the RAN 20 (that is, when QoS control is performed on a radio bearer basis rather than on an IP flow basis, and one-to-one mapping with the radio bearer is possible), the SDAP layer may not be necessary.

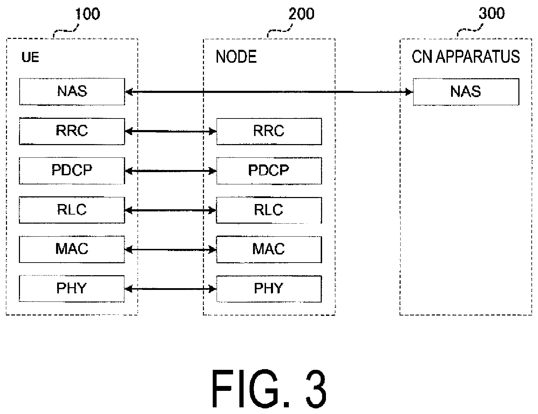

FIG. 3 is a diagram illustrating a configuration example of a protocol stack of a C-plane radio interface that handles signaling (control signal).

The protocol stack of the C-plane radio interface includes, for example, a Radio Resource Control (RRC) layer and a Non-Access Stratum (NAS) layer instead of the SDAP layer illustrated in FIG. 2.

RRC signaling for various settings is transmitted between the RRC layer of the UE 100 and the RRC layer of the base station 200. The RRC layer controls a logical channel, a transport channel, and a physical channel in accordance with establishment, re-establishment, and release of a radio bearer. When connection (RRC connection) is established between the RRC of the UE 100 and the RRC of the base station 200, the UE 100 is in an RRC connected state. When connection (RRC connection) is not established between the RRC of the UE 100 and the RRC of the base station 200, the UE 100 is in an RRC idle state. When the connection between the RRC of the UE 100 and the RRC of the base station 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of the CN apparatus 300. The UE 100 includes an application layer other than the protocol of the radio interface. The layer below the NAS layer is referred to as an AS layer (also simply referred to as "AS").

### (2) Configuration Example of Base Station

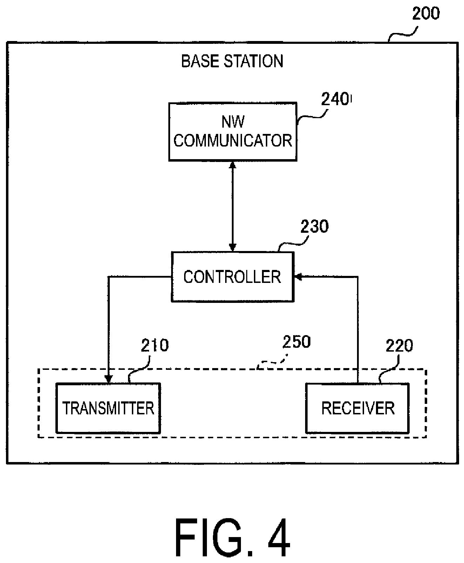

FIG. 4 is a diagram illustrating a configuration example of the base station 200 (network node) according to the present embodiment. The base station 200 according to the present embodiment may be configured to perform wireless communication in a sub-terahertz band.

The base station 200 includes a transmitter 210, a receiver 220, a controller 230, and an NW communicator 240. The transmitter 210 and the receiver 220 configure a wireless communicator 250 that performs wireless communication with the UE 100.

The transmitter 210 performs various transmissions under the control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs a variety of controls and processes in the base station 200. The operations of the base station 200 to be described below may be operations under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The NW communicator 240 is connected to adjacent base stations via an inter-base station interface. The NW communicator 240 is also connected to the CN apparatus 300 via a base station-CN interface.

The transmitter 210 of the base station 200 configured in this manner transmits SSBs using beam sweeping for switching a transmission beam direction at predetermined time intervals, and also transmits SSBs using beamforming for each transmission beam. Details of SSBs and beamforming will be described later.

### (3) Configuration Example of User Equipment

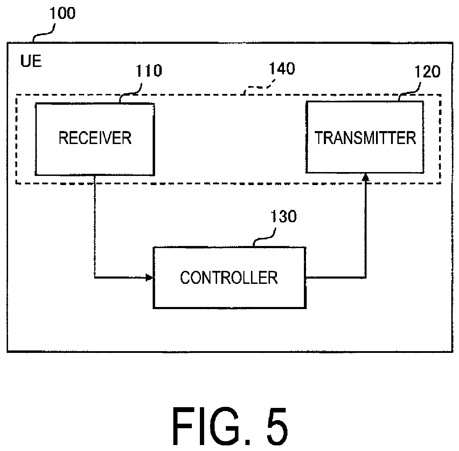

FIG. 5 is a diagram illustrating a configuration example of the UE 100 (user equipment) according to the present embodiment. The UE 100 according to the present embodiment may be configured to perform wireless communication in a sub-terahertz band.

The UE 100 includes a receiver 110, a transmitter 120, and a controller 130. The receiver 110 and the transmitter 120 configure a wireless communicator 140 that performs wireless communication with the base station 200.

The receiver 110 performs various receptions under the control of the controller 130. The receiver 110 includes an antenna and a reception device. The reception device converts a radio signal received through the antenna into a baseband signal (a reception signal) and outputs the resulting signal to the controller 130. The transmitter 120 performs various transmissions under the control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various controls and processes in the UE 100. The operations of the UE 100 to be described below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

The UE 100 configured in this manner performs wireless communication with the base station 200 that manages a cell in a mobile communication system. The receiver 110 receives SSBs transmitted from the base station 200 using beamforming and to which beam sweeping for switching a transmission beam direction at predetermined time intervals has been applied. The controller 130 performs a cell search based on the SSBs received by the receiver 110. Details of the cell search will be described later.

### (4) UAV

Here, an unmanned aerial vehicle (UAV) according to the first embodiment is described.

The UAV is generally an unmanned aircraft, such as a drone. However, in the first embodiment, a UE positioned at an altitude equal to or higher than a predetermined threshold value (or exceeding the predetermined threshold value) is referred to as a UAV. The UAV may be a UE capable of performing wireless communication with the base station 200 while flying in the aerial area in an unmanned manner like an unmanned aircraft. The UAV may be provided in an unmanned aircraft. The UAV may be provided in a manned aircraft. In this case, for example, a UE owned by a user on board of an aircraft, while the aircraft is flying at an altitude equal to or greater than a predetermined threshold value, may also be a UAV. The UAV may be a UAV UE. The UAV may be an Aerial UE. The UAV may be distinguished from a UE that is used in a terrestrial area. However, when not particularly distinguished from the UE, the UAV may be included in a UE as an example of the UE. In this case, the UAV and the UE may collectively be referred to as the UE. The configuration example of the UE 100 illustrated in FIG. 5 may represent a configuration example of a UAV.

In the 3GPP, C2 (command and control) communication is specified as a function that supports UAVs. The C2 communication refers to bidirectional communication required to control the operation of a UAV. For example, a UAV controller controls a UAV via C2 communication.

In the 3GPP, the following C2 communication is considered to provide a UAV service.

First, there is direct C2 communication. In the direct C2 communication, a link for direct C2 communication is established between a UAV and a UAV controller. For the direct C2 communication, wireless resources scheduled and set by a 5G network are used.

Second, there is network-assisted C2 communication. In the network-assisted C2 communication, a UAV and a UAV controller establish a unicast C2 communication link, and communication is performed via a 5G network.

Third, there is UTM-Navigated C2 Communication. Uncrewed Aerial System Traffic Management (UTM) is a set of functions and services that manage the scope of autonomous flight operations. The UTM may be an entity or node that supports the operation of a UAS. In the UTM-Navigated C2 Communication, the UTM provides a pre-scheduled flight plan to a UAV for autonomous flight of the UAV. The UTM maintains C2 communication with the UAV to periodically monitor the flight status of the UAV, update a flight route, and navigate the UAV.

In the 3GPP, four control modes are specified to operate a UAV with respect to C2 communication.

First, there is a steer-to-waypoints mode (information on waypoints or points on a flight path). The waypoints are included in control messages transmitted from a UAV controller or a UTM. The steer-to-waypoints mode is used in both direct C2 communication and network-assisted C2 communication.

Second, there is a direct stick steering mode. In the direct stick steering mode, a control message containing direction instructions is transmitted from a UAV controller to the UAV. Optionally, video traffic may be provided from the UAV to the UAV controller. The direct stick steering mode is used in both direct C2 communication and network-assisted C2 communication.

Third, there is an automatic flight mode by a UTM. In the automatic flight mode by a UTM, a control message including a flight plan is transmitted from a UTM to a UAV. The flight plan may be represented by a four-dimensional polygon. Thereafter, the UAV performs autonomous flight while periodically reporting its position. The automatic flight mode by a UTM is used in UTM-navigated C2 communication.

Fourth, there is an approaching autonomous navigation infrastructure mode. In this mode, a control message including directional instructions (waypoints, altitude, speed, and the like) is transmitted from a UTM to a UAV. When the UAV lands or takes off, the UTM closely coordinates with the autonomous navigation infrastructure (for example, a package distribution center). This mode is used in UTM-navigated C2 communication.

As described above, hereinafter, the UAV and the UE 100 may be referred to as a UE 100 without distinction. On the other hand, when distinguishing between the UAV and the UE 100, they may be referred to as a UAV UE and a terrestrial UE, respectively.

### (5) SSB, Beam Sweeping, and Cell Search

Next, SSBs, beam sweeping, and a cell search will be described.

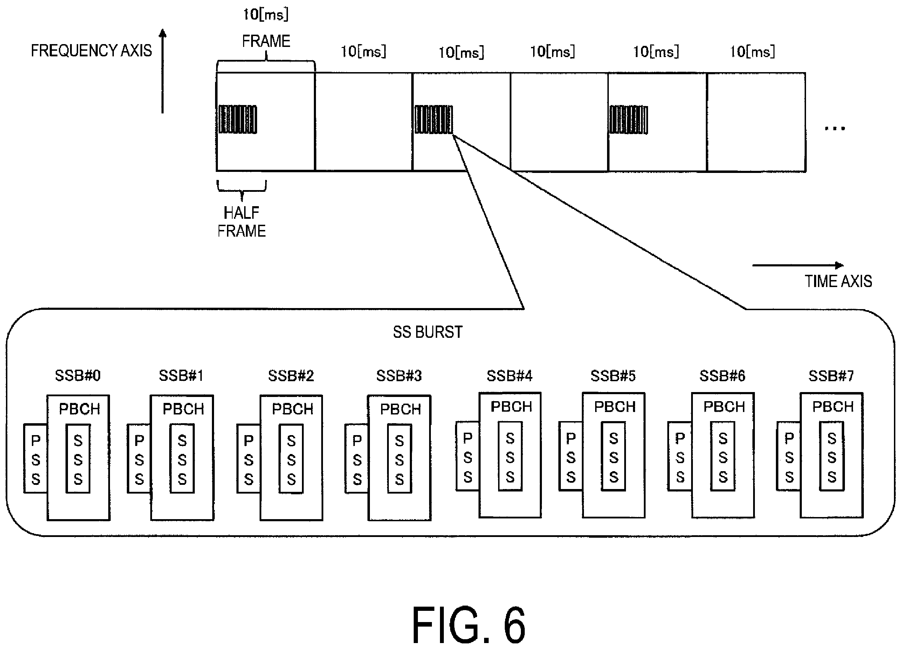

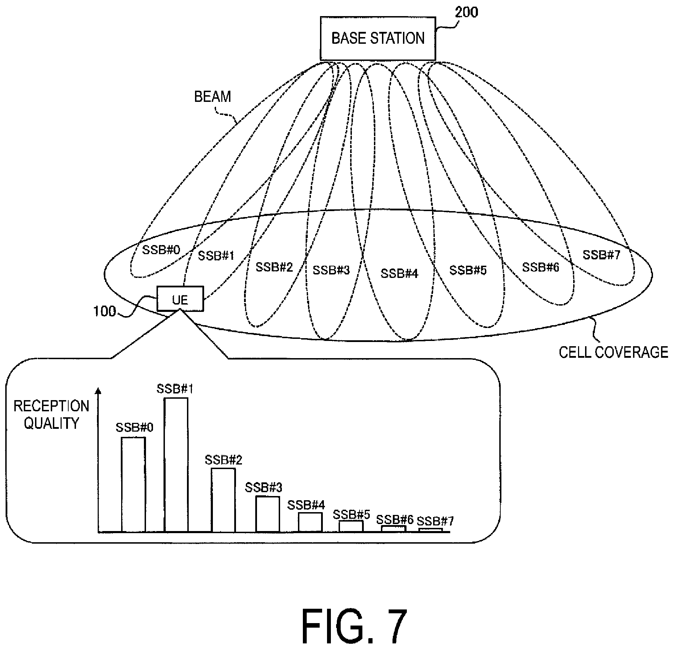

FIGs. 6 and 7 are diagrams illustrating SSBs, beam sweeping, and a cell search according to the first embodiment.

As illustrated in FIG. 6, in a frame structure used in 5G/NR wireless communication, one frame (radio frame) is 10 [ms] long in a time axis direction. A frame is configured with 10 subframes, each of which is 1 [ms] long. Each subframe is configured with a number of slots corresponding to a waveform configuration (also referred to as "Numerology"), such as a subcarrier interval. Specifically, the length of the slot in the time axis direction becomes shorter as the subcarrier interval increases. The number of symbols in one slot is 14 in the case of a normal Cyclic Prefix (CP). On the other hand, in a frequency axis direction, one resource block (RB) is configured with 12 subcarriers. One resource element (RE) is configured with one symbol and one subcarrier.

The transmitter 210 of the base station 200 that manages a cell transmits SSBs (SS/PBCH blocks) used for a cell search by the UE 100. Each SSB is configured with four symbols in the time axis direction and 240 consecutive subcarriers (that is, 20 RBs) in the frequency axis direction. These subcarriers are numbered in ascending order from 0 to 239 within the SSB from a low frequency side to a high frequency side. A subcarrier on the lowest frequency side within an SSB is also referred to as a subcarrier 0. Each of PSS and SSS is configured with one symbol and 127 subcarriers. The PBCH is configured with three symbols and 240 subcarriers.

Each SSB includes a synchronization signal (SS) and a physical broadcast channel (PBCH). The SS includes a primary synchronization signal (PSS) and a secondary synchronization signal (SSS). The PSS and the SSS are used for synchronization at least in the time axis direction. A combination of signal sequences of the PSS and the SSS indicates a cell ID (PCI: Physical Cell ID) of a transmission source cell. The PBCH includes a master information block (MIB) and a demodulation reference signal (DMRS). The MIB includes parameters for decoding a system information block type 1 (SIB1). The DMRS is a reference signal for decoding the PBCH. The SIB1 is also referred to as Remaining Minimum System Information (RMSI). An SSB associated with the SIB1 (RMSI) is referred to as a cell-defined SSB (CD-SSB). In the following, SSB refers to CD-SSB.

SSBs are disposed consecutively in a time direction at a specific frequency within a cell band. Specifically, in the current 3GPP technical specifications, SSBs are disposed at a unique frequency determined in advance on the base station 200 side, and the SSBs are transmitted repeatedly in the time axis direction. The base station 200 can notify the UE 100 of the locations of the SSBs on the frequency axis by RRC signaling.

The transmitter 210 of the base station 200 periodically transmits an SS burst (also referred to as an "SS burst set" or a "synchronization signal burst") configured with a plurality of SSBs aligned in the time axis direction. The transmission period of the SS burst can be selected from among 5 [ms], 10 [ms], 20 [ms], 40 [ms], 80 [ms], and 160 [ms], but 20 [ms] is the most common. The maximum number of SSBs in one SS burst, that is, the maximum number of consecutive SSBs, is 8 in FR1 equivalent to a Sub6 band, and 64 in FR2 equivalent to a millimeter wave band. In the example of FIG. 6, the transmission period of the SS burst is 20 [ms], and the number of SSBs in the SS burst is eight. The SS bursts are specified to be set within the time of a half frame (5 [ms]). Time positions at which SSBs can be disposed within a half frame are determined in accordance with a subcarrier interval. On the other hand, the transmission period of the SS burst (that is, the periodicity of half frames in which SSBs are transmitted) is set by the NW 10 (base station 200).

While the example in FIG. 6 shows a case where all SSBs in an SS burst are transmitted, the base station 200 does not necessarily have to transmit all SSBs in an SS burst. The base station 200 can selectively transmit only some of SSBs in an SS burst depending on the requirements of the NW 10. The base station 200 can notify, by RRC signaling, the UE 100 which SSBs will and will not be transmitted in an SS burst. Specifically, this transmission pattern is notified to the UE 100 as bitmap information using an RRC information element (IE) such as ssb-PositionInBurst.

The controller 230 of the base station 200 assigns each SSB in an SS burst an SSB index (SSB Index) which is an identifier of the SSB. The SSB Index may be a unique number that starts from 0 and increments by one, as illustrated in FIG. 6, or a unique number that starts from "1" and increments by one. This number is reset to the starting number in the next SS burst. When the SSB Index starts from 0, the SSB Index is reset to 0 in the next SS burst. When the SSB Index starts from 1, the SSB Index is reset to 1 in the next SS burst. The base station 200 notifies the UE 100 of the SSB Index via a PBCH in the SSB. The UE 100 that has received the SSB can specify an SSB index of the SSB based on the PBCH in the received SSB.

As illustrated in FIG. 7, in order to transmit SSBs throughout the entire coverage area of a cell, the transmitter 210 of the base station 200 performs beam sweeping for switching a transmission beam direction of the SSBs (also referred to as a "beamforming pattern (BF pattern)") at predetermined time intervals within the period of each SS burst (SS burst period). That is, the base station 200 transmits SSBs in an SS burst in a time-division manner in different transmission beam directions by beam sweeping. Thus, different SSBs are transmitted in different spatial directions (that is, different transmission beam directions) to span a coverage area of a cell during a half frame. Thereby, even the SSBs are transmitted using beamforming, the SSBs can be distributed throughout the entire coverage area (cell coverage) of the cell in the SS burst.

On the other hand, the controller 130 of the UE 100 performs a cell search based on SSBs (specifically, PSS, SSS, and DMRS in the SSBs). The cell search is a procedure in which the UE 100 obtains time and frequency synchronization with a cell and detects a cell ID of the cell. The receiver 110 of the UE 100 performs SSB scanning (cell search) on a synchronization raster, which is a position on the frequency axis where SSBs can be disposed. The receiver 110 (or controller 130) of the UE 100 measures the reception quality of each received SSB and specifies an appropriate beam by specifying an SSB index of an SSB whose reception quality satisfies a predetermined condition. Here, the reception quality may be a Reference Signal Received Power (RSRP) of the SSB. The predetermined condition may be a condition that the reception quality exceeds a threshold value. The predetermined condition may be a condition that the SSB has the highest reception quality among the SSBs received within a predetermined period (for example, an SS burst period). In the example of FIG. 7, SSB #1 has the highest reception quality, and thus the UE 100 can specify the SSB #1 as the SSB whose reception quality satisfies the predetermined condition.

The controller 130 of the UE 100 performs random access (RA) to initially access the NW 10 (base station 200). Specifically, the transmitter 120 of the UE 100 transmits an RA preamble to the base station 200 to perform RA. RA occasions, which are timings at which the RA preamble can be transmitted, are prepared by a number equal to the number of transmission beams of the base station 200 (that is, the number of SSBs in an SS burst). The UE 100 transmits an RA preamble to the base station 200 in an RA occasion corresponding to an SSB (SSB Index) whose reception quality satisfies a predetermined condition. Upon receiving the RA preamble, the controller 230 of the base station 200 can ascertain a transmission beam preferred for the UE 100 (that is, a direction in which the UE 100 is located) based on a correspondence relationship between the beam (SSB Index) and the RA occasion.

The RA occasion is notified to the UE 100 in system information provided by the base station 200. Specifically, the transmitter 210 of the base station 200 notifies the UE 100 of the time and frequency resources of the RA occasion. An SSB and an RA occasion have a one-to-one relationship. When the base station 200 directs a transmission beam in a certain direction and receives an RA occasion corresponding to the SSB, the base station 200 receives it using a reception beam directed in the same direction as the transmission beam.

In the mobile communication system 1, beam sweeping and a cell search are performed as described above.

The transmitter 210 of the base station 200 transmits configuration information indicating SSB parameters. The configuration information may be transmitted to the receiver 110 of the UE 100 using a PBCH (MIB), an SIB, or an RRC message (for example, an RRC Reconfiguration message). The configuration information may include at least one piece of information (SSB parameters) among the following (A1) to (A3).

### (A1) OffsetToPointA

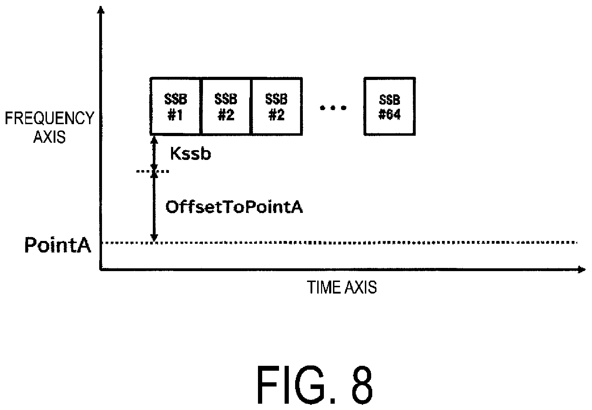

FIG. 8 is a diagram illustrating OffsetToPointA and Kssb (ssb-SubcarrierOffset) according to the first embodiment. As illustrated in FIG. 8, the OffsetToPointA is information that indicates, in resource block units, a frequency offset between a subcarrier (subcarrier 0) on a lowest frequency side of a corresponding SSB and a reference point (referred to as "PointA") on a resource block grid. PointA indicates a reference position on a frequency axis. The transmitter 210 of the base station 200 may transmit (set) OffsetToPointA of the SSB to be transmitted in its own cell, included in an SIB1 that is broadcasted in the cell.

### (A2) Kssb (ssb-SubcarrierOffset)

As illustrated in FIG. 8, Kssb (ssb-SubcarrierOffset) is information that indicates, in subcarrier units, a frequency offset between the subcarrier on the lowest frequency side (subcarrier 0) of the corresponding SSB and a boundary on a low frequency side of the resource block to which the subcarrier (subcarrier 0) belongs. Thus, the UE 100 can obtain a reference point (Point A) of a resource block grid by subtracting the sum of Kssb (ssb-SubcarrierOffset) and OffsetToPointA from the subcarrier 0. The transmitter 210 of the base station 200 may transmit (set) Kssb (ssb-SubcarrierOffset) of an SSB to be transmitted within its own cell, included in an MIB that is broadcasted in the cell.

### (A3) absoluteFrequencySSB

absoluteFrequencySSB is information indicating the frequency of the corresponding SSB (ARFCN: Absolute Radio-Frequency Channel Number). The frequency indicated by absoluteFrequencySSB may be the position of resource element RE=#0 of a resource block RB#10 of the SSB. For example, when setting a secondary cell (SCell) for the UE 100, the transmitter 210 of the base station 200 may transmit (set), to UE 100, absoluteFrequencySSB for the secondary cell which is included in an RRC Reconfiguration message.

### (6) Communication Method According to First Embodiment

As described above, in the base station 200 (network node), a coverage area facing the aerial area is not necessarily optimized.

To optimize the coverage area, for example, it is possible to uptilt a directional antenna used in the transmitter 210 of the base station 200. However, changing the settings of the directional antenna is not practical considering costs and other aspects.

On the other hand, in 5G/NR, it is also possible to perform beamforming in a three-dimensional direction by using a panel antenna (or an array antenna) with a plurality of antenna elements provided on a flat panel and controlling the phase (or angle) of a signal transmitted from each antenna element. For this reason, it is also possible to perform beamforming toward both a terrestrial area and an aerial area using a single panel antenna. Furthermore, it is also possible to transmit SSBs to the aerial area and the terrestrial area in a time-division manner by beam sweeping using a single panel antenna.

However, in the current SSB specifications, SSBs for the aerial area and SSBs for the terrestrial area are not distinguished from each other. A case is assumed in which the base station 200 transmits SSBs to the aerial area and SSBs for the terrestrial area in a time-division manner by beam sweeping. In this case, a UAV flying in the aerial area may measure both SSBs for the aerial area and SSBs for the terrestrial area during a cell search. Similarly, a terrestrial UE located in the terrestrial area may measure both SSBs for the aerial area and SSBs for the terrestrial area during a cell search.

In this manner, the UE 100 (UAV UE and terrestrial UE) may measure SSBs that are not related to a geographical area to which it belongs, and it cannot necessarily be said that a cell search is performed efficiently.

Consequently, an object of the first embodiment is to improve the efficiency of a cell search in the UE 100. Furthermore, another object of the first embodiment is to reduce power consumption of the UE 100 by improving the efficiency of a cell search.

Here, as a comparative example, an SSB transmission pattern in a case where SSBs for aerial use and SSBs for terrestrial use are transmitted in a time-division manner will be described.

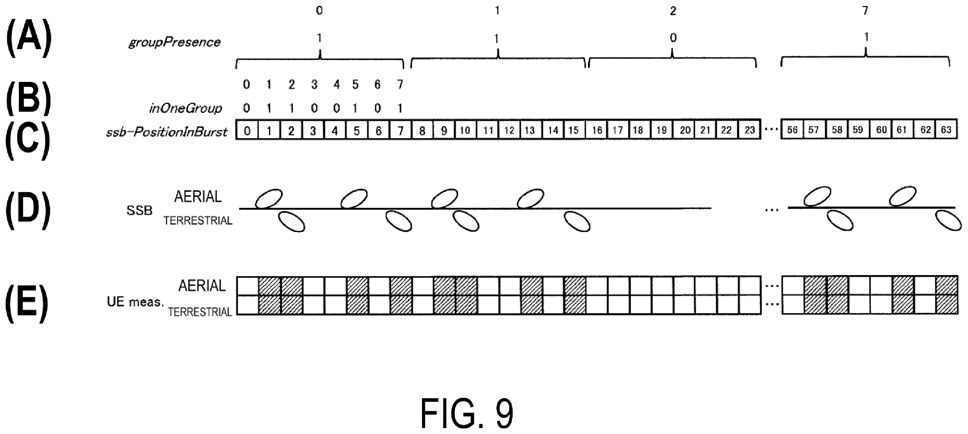

FIGs. 9(A) to 9(E) illustrate an example of an SSB transmission operation according to the first embodiment. Among these, FIGs. 9(A) to 9(C) illustrate examples of bitmap information according to the current 3GPP specifications. FIG. 9(D) illustrates an example of an SSB transmission pattern. FIG. 9(E) illustrates an example of a measurement operation in a cell search of the UE 100.

As described above, the base station 200 does not necessarily need to transmit all SSBs in an SS burst, but can selectively transmit only some of the SSBs. Whether an SSB is transmitted at an SSB transmittable timing is indicated by bitmap information.

### (B1) inOneGroup

FIG. 9(B) illustrates an example of inOneGroup. inOneGroup indicates whether an SSB is transmitted for each SSB index (or SSB transmittable timing) within a group when a predetermined period (a period equivalent to eight consecutive SSB indices) in an SS burst (one cycle period) is set to be one group. In the current 3GPP specifications, inOneGroup is represented as 8-bit bitmap information (for example, first bitmap information). A bit at a left end corresponds to SSB index #0, and a second bit corresponds to SSB index #1. A bit "0" indicates that no SSB is transmitted at the SSB index, and a bit "1" indicates that an SSB is transmitted at the SSB index. When the total number of SSBs per half frame is "4", left-end 4 bits of the 8-bit inOneGroup are valid, and right-end 4 bits are ignored. When the total number of SSBs per half frame is "8", all 8 bits of inOneGroup are valid. Furthermore, when the total number of SSBs per half frame is "64", all 8 bits of inOneGroup are valid. However, in this case, when 8 consecutive SSB indices are considered to be one group, and an SSB is transmitted in any one SSB index within the group, and an SSB is transmitted in any one SSB index within another group, bitmap information of inOneGroup are the same between the two groups. For example, as illustrated in FIG. 9(B), when SSBs are transmitted in the first eight consecutive SSB indices (that is, one group) and then SSBs are transmitted in the next eight consecutive SSB indices, bitmap information of inOneGroup for the first eight SSB indices and bitmap information of inOneGroup for the next eight SSB indices are the same.

### (B2) groupPresence

FIG. 9(A) illustrates an example of groupPresence. As illustrated in FIG. 9(A), left-end bits of groupPresence correspond to SSB index #0 to SSB index #7, and the next bits correspond to SSB index #8 to SSB index #15. groupPresence is also represented as bitmap information (for example, second bitmap information). A bit "1" in groupPresence indicates that an SSB is transmitted in at least one SSB index among eight consecutive SSB indices (that is, one group), while a "0" bit indicates that no SSB is transmitted in one group. That is, groupPresence is bitmap information that indicates whether an SSB is transmitted for each predetermined period in an SS burst (a period equivalent to eight consecutive SSB indices). In the current 3GPP specifications, groupPresence is also 8 bits long and is present when the number of SSBs per half frame is "64".

### (B3) ssb-PositionInBurst

FIG. 9(C) illustrates an example of ssb-PositionInBurst. ssb-PositionInBurst indicates a position in a time domain of an SSB in an SS burst. Specifically, ssb-PositionInBurst indicates whether an SSB is transmitted for each SSB index (or for each SSB transmittable timing) for all SSB indices in the SS burst. ssb-PositionInBurst is also an example of bitmap information (for example, third bitmap information).

ssb-PositionInBurst may include groupPresence and inOneGroup. For this reason, the transmitter 210 of the base station 200 can transmit inOneGroup and groupPresence by transmitting ssb-PositionInBurst. The controller 130 of the UE 100 can confirm whether an SSB is being transmitted for each SSB index by using a combination of inOneGroup and groupPresence. For example, the controller 130 of the UE 100 can perform the following processing.

That is, when groupPresence is "1", the controller 130 confirms that an SSB is transmitted within a group of eight consecutive SSB indices, and confirms whether an SSB is transmitted for each of the eight SSB indices within the group by confirming inOneGroup. The controller 130 then receives an SSB at the timing of each SSB index that is "1" in inOneGroup (that is, the transmission timing of each SSB), and can be configured not to receive an SSB at the timing of each SSB index that is "0" in inOneGroup (that is, the transmission timing of each SSB). On the other hand, when groupPresence is "0", the controller 130 confirms that no SSB is transmitted in the group, and can be configured not to receive an SSB. The controller 130 can also cause the receiver 110 to perform an SSB reception operation at a timing when an SSB is transmitted, and not to perform an SSB reception operation at a timing when no SSB is transmitted. The meanings of "0" and "1" in the bitmap information may be reversed.

In the current 3GPP specifications, ssb-PositionInBurst is configured with 16 bits including 8 bits of inOneGroup and 8 bits of groupPresence. For this reason, as described above, bitmap information used in inOneGroup is the same for other groups in the same burst.

ssb-PositionInBurst (or inOneGroup and groupPresence included in ssb-PositionInBurst) is transmitted from the transmitter 210 of the base station 200 using an SIB1 and can be received by the receiver 110 of the UE 100. An SSB index is transmitted from the transmitter 210 of the base station 200 using a PBCH of an SSB and can be received by the receiver 110 of the UE 100. For this reason, the controller 130 of the UE 100 can confirm whether an SSB is transmitted for each SSB index by using the SSB index and ssb-PositionInBurst (or inOneGroup and groupPresence included in ssb-PositionInBurst) and can receive the SSB.

ssb-PositionInBurst can also be transmitted using an individual RRC message (for example, an RRCReconfiguration message). In this case, ssb-PositionInBurst does not include inOneGroup and groupPresence. Instead, ssb-PositionInBurst includes a bit indicating whether an SSB is transmitted for each SSB index in an SS burst, for all SSB indices in the SS burst. In this case, ssb-PositionInBurst can have a number of bits (4 bits, 8 bits, 64 bits, or the like) corresponding to the number of SSBs (or number of SSB indices) per half frame. For example, in the example of ssb-PositionInBurst illustrated in FIG. 9(C), whether an SSB is transmitted is indicated over 64 bits.

In this manner, whether an SSB is to be transmitted in an SS burst (or one cycle period) of a predetermined frequency can be indicated as bitmap information by using inOneGroup and groupPresence (or ssb-PositionInBurst). In the UE 100, it is possible to confirm whether an SSB is to be transmitted by using the bitmap information.

The above is an example of an SSB transmission pattern as a comparative example.

As described above, in the current 3GPP specifications, SSBs for aerial use and SSBs for terrestrial use are not distinguished from each other.

For this reason, as illustrated in FIG. 9(E), both SSBs for aerial use and SSBs for terrestrial use are measured in a cell search, irrespective of whether the UE is a UAV UE or a terrestrial UE. It cannot necessarily be said that such a cell search is efficient.

Consequently, in the first embodiment, the base station 200 transmits a plurality of types of bitmap information that differ depending on type, the bitmap information indicating whether to transmit an SSB within an SS burst period (one cycle period) at a predetermined frequency. Examples of bitmap information depending on type are as follows.

### (7) Example of Bitmap Information

First, the type may be an altitude. That is, bitmap information may include a plurality of types of bitmap information corresponding to an altitude. Specifically, the bitmap information may include inOneGroup (bitmap information) for aerial use and inOneGroup (bitmap information) for terrestrial use.

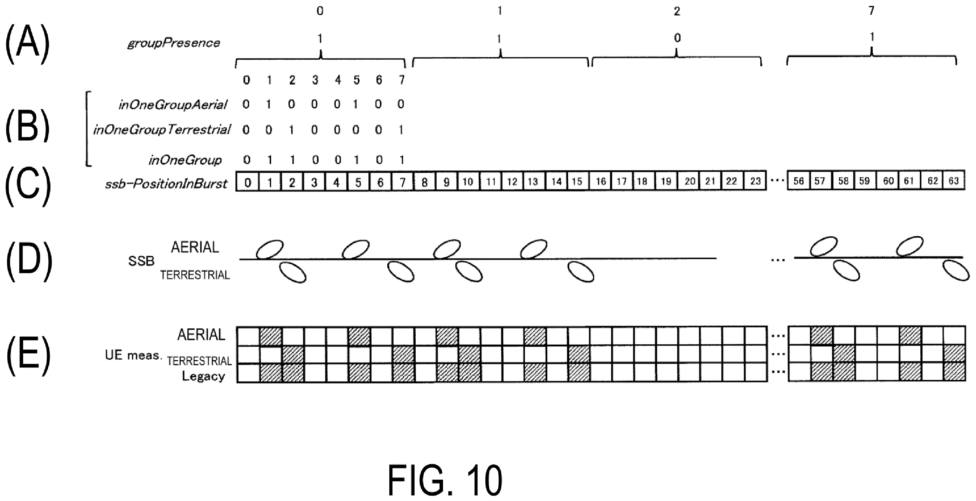

FIGs. 10(A) to 10(E) illustrate an example of an SSB transmission operation when inOneGroup for aerial use and inOneGroup for terrestrial use are different from each other. In the example illustrated in FIG. 10(B), inOneGroup for aerial use ("inOneGroupAerial") and inOneGroup for terrestrial use ("inOneGroupTerrestrial") are set. When the UE 100 can ascertain whether it is located in an aerial area or in a terrestrial area, it can apply any one inOneGroup depending on its location. Then, for example, when the UE 100 is located in an aerial area, it confirms inOneGroup for aerial use. For example, the receiver 110 of the UE 100 receives an SSB at the timing of an SSB index that is "1" in inOneGroup for aerial use (that is, an SSB transmission timing), and does not receive an SSB at the timing of an SSB index that is "0". Thereby, the receiver 110 of the UE 100 located in an aerial area can receive an SSB transmitted for aerial use without receiving an SSB transmitted for terrestrial use (FIG. 10(E)). For example, when the UE 100 is located in a terrestrial area, it confirms inOneGroup for terrestrial use. For example, the receiver 110 of the UE 100 receives an SSB at the timing of an SSB index that is "1" in inOneGroup for terrestrial use (that is, an SSB transmission timing), and does not receive an SSB at the timing of an SSB index that is "0". Thereby, the receiver 110 of the UE 100 located in a terrestrial area can receive an SSB transmitted for terrestrial use without receiving an SSB transmitted for aerial use (FIG. 10(E)). Thus, the UE 100 can shorten the time of a cell search and perform the cell search more efficiently compared to a case where the UE 100 receives both SSBs for aerial use and SSBs for terrestrial use, as illustrated in FIG. 9(B). For this reason, the UE 100 can reduce power consumption compared to the case in FIG. 9(B).

The transmitter 210 of the base station 200 transmits an altitude threshold value to specify an aerial area and a terrestrial area. The transmitter 210 of the base station 200 may transmit the altitude threshold value included in an SIB1. The receiver 110 of the UE 100 receives the altitude threshold value. The controller 130 of the UE 100 specifies either inOneGroup for aerial use or inOneGroup for terrestrial use based on the altitude threshold value. Specifically, the controller 130 measures its own altitude. The controller 130 may measure the altitude of the UE 100 using an altitude sensor provided in the UE 100, or may measure the altitude using a distance sensor (such as a radar or a lidar) provided in the UE 100. The altitude may be expressed in terms of height above sea level, altitude above sea level, or height from the ground. The controller 130 may determine that the measured altitude is in an aerial area when the measured altitude is equal to or greater than the altitude threshold value, and that the measured altitude is in a terrestrial area when the measured altitude is less than the altitude threshold value. When the controller 130 determines that the measured altitude is in an aerial area, the controller 130 determines to apply inOneGroup for aerial use. When the controller 130 determines that the measured altitude is in a terrestrial area, the controller 130 determines to apply inOneGroup for terrestrial use.

As illustrated in FIG. 10(B), the transmitter 210 of the base station 200 may transmit inOneGroup of the related art ("inOneGroup"). This is because, for example, some UEs 100 may not be able to process both inOneGroup for aerial use and the inOneGroup for terrestrial use, even when the UEs 100 receive them. For such UEs 100 (hereinafter may be referred to as "legacy UEs"), the base station 200 transmits inOneGroup of the related art as a legacy UE. Thereby, the legacy UE can confirm inOneGroup to confirm whether an SSB is transmitted. However, in this case, the legacy UE will measure the SSB during a cell search without distinguishing between SSBs for aerial use and SSBs for terrestrial use (FIG. 10(E)).

Second, the type may include an absolute position in a space. That is, the bitmap information includes a plurality of types of bitmap information corresponding to an absolute position in a space. Specifically, the bitmap information may include inOneGroup (bitmap information) corresponding to a first area in a space and inOneGroup (bitmap information) corresponding to a second area in a space. For example, in FIG. 10(B), inOneGroup for aerial use ("inOneGroupAerial") may be replaced with inOneGroup for the first area (for example, "inOneGroupFirstArea"), and inOneGroup for terrestrial use ("inOneGroupTerrestrial") may be replaced with inOneGroup for the second area (for example, "inOneGroupSecondArea"). In the UE 100, in order to specify which inOneGroup it is, the transmitter 210 of the base station 200 transmits a spatial threshold value. The spatial threshold value may be expressed by a latitude and a longitude. A latitude and a longitude are represented expressed as two-dimensional coordinates in a terrestrial area, but it is also possible to specify, for example, an area up to a predetermined altitude, which is obtained by vertically extending the two-dimensional area expressed by a latitude and a longitude, as a spatial area. The spatial threshold value may also include a latitude and a longitude, and may further include height information. The controller 130 of the UE 100 may measure a position (and height) using its own GNSS reception function, for example. By comparing the measured position with the altitude threshold value, the controller 130 can specify inOneGroup corresponding to the first area and inOneGroup corresponding to the second area. Then, the receiver 110 of the UE 100 can receive either an SSB for the first area or an SSB for the second area using the bitmap information represented by any one specified inOneGroup. In this case, the UE 100 only needs to receive any one SSB corresponding to its absolute position in a space and perform a cell search, compared to when the UE 100 receives all of the SSBs for the first area and the second area, which makes it possible to improve the efficiency of the cell search in the UE 100 and reduce power consumption.

### (8) Other Examples of Bitmap Information

Next, other examples of bitmap information will be described.

### (8-1) Another Example 1 of Bitmap Information

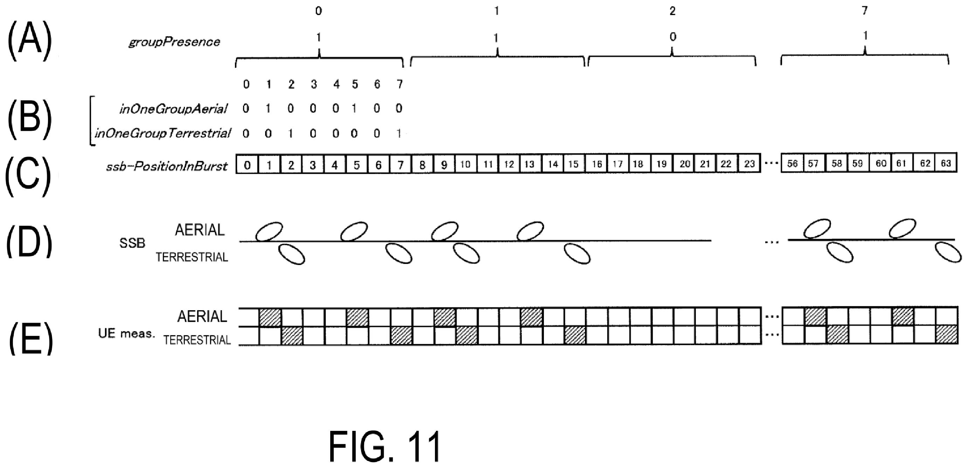

FIGs. 11(A) to 11(E) are diagrams illustrating another example of an SSB transmission operation according to the first embodiment. Compared to the examples illustrated in FIGs. 10(A) to 10(E), FIGs. 11(A) to 11(E) illustrate examples in which inOneGroup of the related art is not transmitted. In this case, as described above, the UE 100 (for example, a UE for Rel-19) capable of processing both inOneGroup for aerial use and inOneGroup for terrestrial use can be targeted. Even when the type is an absolute location, inOneGroup of the related art may not be transmitted, and inOneGroups for each area may be set.

### (8-2) Another Example 2 of Bitmap Information

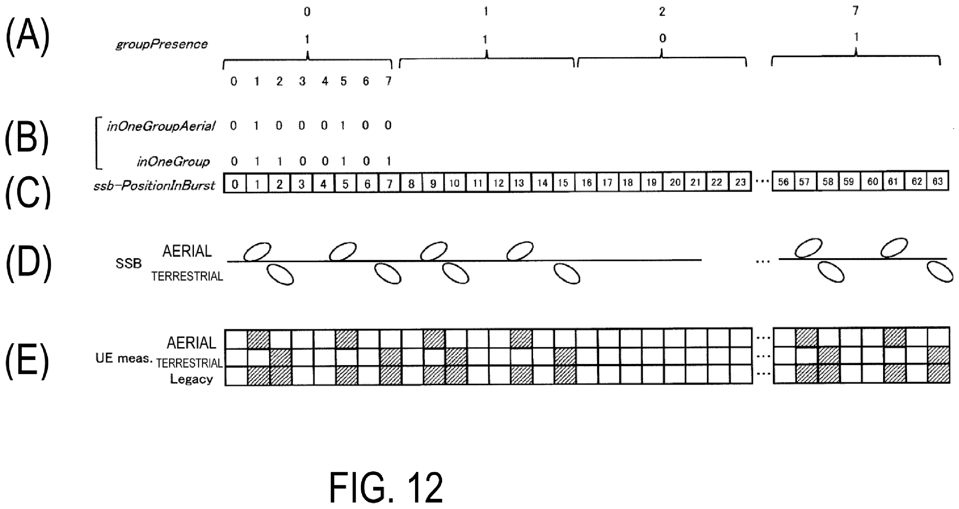

FIGs. 12(A) to 12(E) are diagrams illustrating another example of an SSB transmission operation according to the first embodiment. FIGs. 12(A) to 12(E) illustrate an example in which, for inOneGroup, two inOneGroups, that is, inOneGroup for aerial use ("inOneGroupAerial") and inOneGroup of the related art ("inOneGroup"), are set. In this case, it is possible to handle both a legacy UE that cannot process inOneGroup for aerial use and the UE 100 for Rel-19 that can process inOneGroup for aerial use. That is, the legacy UE uses inOneGroup of the related art. On the other hand, when the UE 100 for Rel-19 determines that the UE 100 itself is located in an aerial area, it performs an SSB reception operation using inOneGroup for aerial use. Furthermore, when the UE 100 for Rel-19 determines that the UE 100 itself is located in a terrestrial area, it performs an SSB reception operation using inOneGroup of the related art. Thereby, for example, a UAV UE flying in the sky can receive SSBs for aerial use without receiving SSBs for terrestrial use by confirming inOneGroup for aerial use. For this reason, the UAV UE can perform a cell search more efficiently and reduce power consumption compared to when receiving SSBs for terrestrial use.

When the type is an absolute location, the base station 200 may transmit both inOneGroup for the first area and inOneGroup of the related art. When the UE 100 for Rel-19 determines that the UE 100 itself is located in the first area, the UE 100 uses inOneGroup for the first area. When the UE 100 determines that the UE 100 itself is located in another area, the UE 100 may use inOneGroup of the related art. The legacy UE may use inOneGroup of the related art.

### (8-3) Another Example 3 of Bitmap Information

In the above-described bitmap information, an example has been described in which a plurality of inOneGroups different depending on the type are set for inOneGroup, but this is not limiting. For example, a plurality of types of groupPresence that differ depending on the type may be set for groupPresence.

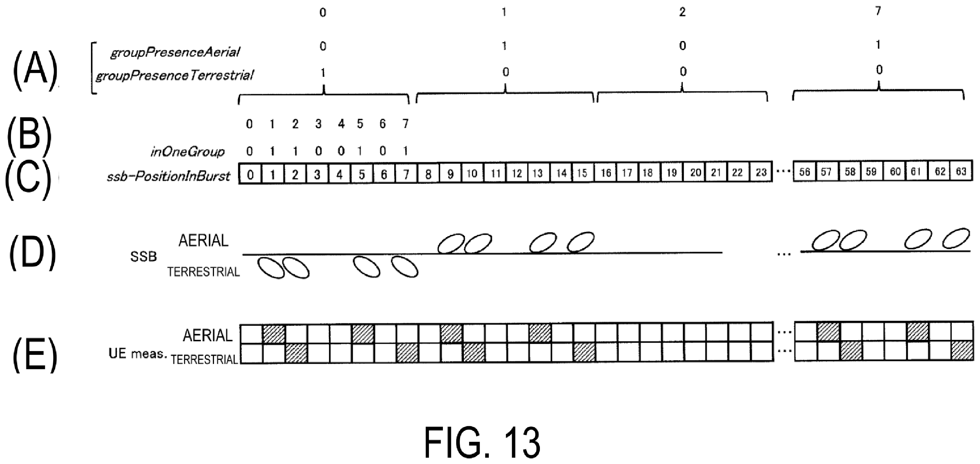

FIGs. 13(A) to 13(E) illustrate an example of an SSB transmission operation when groupPresence for aerial use ("groupPresenceAerial") and groupPresence for terrestrial use ("groupPresenceTerrestrial") are set. That is, in this example, groupPresence is groupPresence (bitmap information) varying depending on an altitude (type), that is, whether it is in an aerial area or a terrestrial area. Also in this case, the transmitter 210 of the base station 200 transmits an altitude threshold value. The receiver 110 of the UE 100 receives the altitude threshold value. The controller 130 of the UE 100 specifies either groupPresence for aerial use or groupPresence for terrestrial use based on the altitude threshold value, and determines to apply the specified groupPresence.

The UE 100 that has determined to apply groupPresence for aerial use receives an SSB using groupPresence for aerial use. That is, the receiver 110 of the UE 100 confirms inOneGroup within a group in which groupPresence for aerial use is set to "1", receives an SSB at the timing of an SSB index in which inOneGroup is set to "1" (that is, an SSB transmission timing), and does not receive an SSB at the timing of an SSB index in which inOneGroup is set to "0" (FIG. 13(E)). Thereby, the UE 100 located in an aerial area can receive an SSB transmitted for aerial use without receiving am SSB transmitted for terrestrial use, by confirming groupPresence for aerial use and inOneGroup within the group in which groupPresence for aerial use is set to "1".

On the other hand, the UE 100 that has determined to apply groupPresence for terrestrial use also confirms inOneGroup within a group in which terrestrial groupPresence is set to "1", receives an SSB at the timing of an SSB index in which inOneGroup is set to "1" (that is, an SSB transmission timing), and does not receive an SSB at the timing of an SSB index in which inOneGroup is set to "0" (FIG. 13(E)). Thereby, the UE 100 located in a terrestrial area can receive an SSB transmitted for terrestrial use without receiving an SSB transmitted for aerial use, by confirming groupPresence for terrestrial use and inOneGroup within the group in which terrestrial groupPresence is set to "1".

The receiver 110 may not perform a reception operation for a group in which both groupPresence for aerial use and groupPresence for terrestrial use are set to "0".

In addition to groupPresence for aerial use and groupPresence for terrestrial use, groupPresence of the related art ("groupPresence") may also be set for groupPresence. A legacy UE that cannot process groupPresence for aerial use and groupPresence for terrestrial use can confirm groupPresence of the related art to confirm whether an SSB is transmitted within a group. However, in this case, since the legacy UE cannot distinguish between SSBs for aerial use and SSBs for terrestrial use, the legacy UE receives all SSBs and performs a cell search.

Two groupPresences, that is, groupPresence for aerial use and groupPresence of the related art ("groupPresence"), may be set for groupPresence. A UE 100 (for example, a UE for Rel-19) capable of processing groupPresence for aerial use uses groupPresence for aerial use when the UE 100 determines that the UE 100 itself is located in an aerial area based on an altitude threshold value, and uses groupPresence of the related art when it determines that it is located in a terrestrial area. On the other hand, the legacy UEs use groupPresence of the related art.

The above description of groupPresence has been made to an example in which the type is an altitude, but it is also applicable when the type is an absolute position in a space. In the above description, this can be implemented by replacing "for aerial use" with "for a first area" and "for terrestrial use" with "for a second area".

### (8-4) Another Example 4 of Bitmap Information

In the above, description has been given in which a plurality of inOneGroups and groupPresences that differ depending on the type are set separately for inOneGroup and groupPresence. However, bitmap information is not limited thereto. For example, a plurality of inOneGroups that differ depending on the type may be set for inOneGroup, and a plurality of types of groupPresence that differ depending on the type may be set for groupPresence. In this case, for example, the transmitter 210 of the base station 200 may transmit inOneGroup for aerial use, inOneGroup for terrestrial use, groupPresence for aerial use, and groupPresence for terrestrial use. In this case, the transmitter 210 of the base station 200 may transmit inOneGroup of the related art and groupPresence of the related art for the legacy UE.

This case is also applicable when the type is distinguished by an absolute position in a space. In the above description, this can be implemented by replacing "for aerial use" with "for a first area" and "for terrestrial use" with "for a second area".

### (8-5) Another Example 5 of Bitmap Information

In the examples illustrated in FIGs. 10(A) to 10(E), description has been given of an example in which there are two types of bitmap information, one for aerial use and one for terrestrial use, classified by an altitude, but there may be three or more types of bitmap information classified by an altitude. For example, three types of altitude-specific bitmap information may be set, that is, inOneGroup for terrestrial use (and/or groupPresence for terrestrial use), inOneGroup for a medium altitude (and/or groupPresence for a medium altitude), and inOneGroup for a high altitude (and/or groupPresence for a high altitude).

The transmitter 210 of the base station 200 may set the bitmap information by transmitting altitude-specific bitmap information and altitude threshold values in a list format, such as {(bitmap information #1, altitude threshold value #1), (bitmap information #2, altitude threshold value #2), (bitmap information #3, altitude threshold value #3), ...}. The bitmap information corresponds to inOneGroup and/or groupPresence. Each altitude threshold value and bitmap information may be associated with each other, and the controller 130 of the UE 100 may perform processing such as applying the bitmap information #1 when the altitude is less than the altitude threshold value #1, and applying the bitmap information #2 when the altitude is equal to or greater than the altitude threshold value #1 and less than the altitude threshold value #2. The altitude threshold value may also be indicated as a range.

Even when the type is an absolute position in a space, three or more types of bitmap information may be set. For example, inOneGroup for a first area (and/or groupPresence for the first area), inOneGroup for a second area (and/or groupPresence for the second area), and inOneGroup for a third area (and/or groupPresence for a high altitude) may be set. The transmitter 210 of the base station 200 may transmit the bitmap information and spatial threshold value for each area in a list format. The spatial threshold value may also be expressed as a range.

### (9) Operation Example according to First Embodiment

An operation example according to the first embodiment will be described.

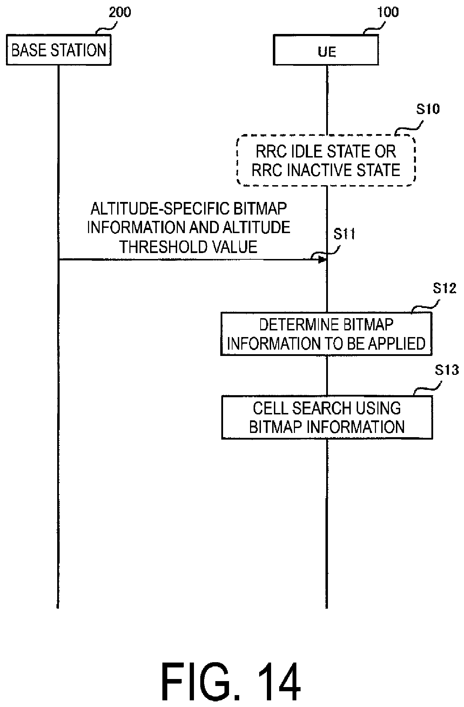

FIG. 14 is a diagram illustrating an operation example according to the first embodiment. FIG. 14 illustrates an operation example when an "altitude" is an example of the type.

In step S10, the UE 100 may be in an RRC idle state or an RRC inactive state.

In step S11, the transmitter 210 of the base station 200 broadcasts altitude-specific bitmap information and an altitude threshold value using an SIB1.

The altitude-specific bitmap information may include inOneGroup (bitmap information) for aerial use and inOneGroup (bitmap information) for terrestrial use. Alternatively, the altitude-specific bitmap information may include groupPresence (bitmap information) for aerial use and groupPresence (bitmap information) for terrestrial use. Alternatively, the altitude-specific bitmap information may include inOneGroup for aerial use, inOneGroup for terrestrial use, groupPresence for aerial use, and groupPresence for terrestrial use.

Instead of an altitude, it may be represented by an absolute position in a space. In this case, the altitude-specific bitmap information becomes area-specific bitmap information. The area-specific bitmap information may include inOneGroup (bitmap information) corresponding to the first area and inOneGroup (bitmap information) corresponding to the second area. Alternatively, the area-specific bitmap information may include groupPresence (bitmap information) corresponding to the first area and groupPresence (bitmap information) corresponding to the second area. Alternatively, the area-specific bitmap information may include inOneGroup corresponding to the first area, inOneGroup corresponding to the second area, groupPresence corresponding to the first area, and groupPresence corresponding to the second area. When an absolute position in a space is used instead of an altitude, a spatial threshold value (for example, a latitude and a longitude) for specifying an area may be transmitted instead of the altitude threshold value.

The transmitter 210 of the base station 200 may transmit the altitude-specific bitmap information (or area-specific bitmap information) and the altitude threshold value (or spatial threshold value) using an SIB1. The receiver 110 of the UE 100 receives the altitude-specific bitmap information (or area-specific bitmap information) and the altitude threshold value (or spatial threshold value). For this transmission, an individual RRC message (for example, an RRC Release message) may be used instead of an SIB1. When the UE 100 is in an RRC connected state in step S10, the UE 100 may transition to an RRC idle state or an RRC inactive state by receiving the individual RRC message.

In step S12, the controller 130 of the UE 100 determines bitmap information to be applied, based on the altitude threshold value. When the controller 130 determines that the controller 130 itself is located in an aerial area, the controller 130 determines to apply inOneGroup for aerial use (and/or groupPresence for aerial use). When the controller 130 determines that the controller 130 itself is located in a terrestrial area, the controller 130 determines to apply inOneGroup for terrestrial use (and/or groupPresence for terrestrial use). Even when the type is an absolute position in a space, the controller 130 can determine bitmap information to be applied, based on a spatial threshold value. In this case, the controller 130 may specify its own position (latitude and longitude) using a Global Navigation Satellite System (GNSS) reception function within the UE 100, or may specify its own position (latitude and longitude) using an RF fingerprint that indicates reception quality.

In step S13, the controller 130 of the UE 100 performs a cell search using the determined bitmap information.

### (10) Another Operation Example According to First Embodiment

In the first embodiment, a case where the number of SSBs is "64" in a half frame has been described. The number of SSBs may be other than "64", and "128", "256", "512", and the like may be used, for example. In this case, bitmap information of inOneGroup may be expressed as any bit length, such as 16 or 32 bits, rather than 8 bits. With regard to groupPresence, it may also be indicated whether SSBs are transmitted for any number of consecutive SSB indices, such as 16 or 32 SSB indices, rather than for every 8 consecutive SSB indices (that is, one group).

### Second Embodiment

Next, a second embodiment will be described. In the second embodiment, differences from the first embodiment will be mainly described.

In the first embodiment, an example has been described in which the number of SSBs in a half frame is 64. In this case, for example, when the number of blocks is divided into SSBs for aerial use and SSBs for terrestrial use as illustrated in FIGs. 10(C) and 10(D), both the number of SSBs for aerial use and the number of SSBs for terrestrial use may be less than 64. That is, all 64 SSBs for aerial use cannot be used, and all 64 SSBs for terrestrial use cannot be used.

For 6G and the like, the use of a sub-terahertz band (for example, a frequency range from 90 GHz to 300 GHz) is primarily considered, and it is expected that the number of SSBs in an SS burst will further increase in the sub-terahertz band. Furthermore, with the advancement of antenna technology, it becomes possible to provide thousands of antenna elements on a single antenna panel (or antenna array) and to support simultaneous multiple connections with an extremely large number of UEs 100.

In such a situation, it cannot be said that limiting the number of SSBs is desirable.

On the other hand, a case where the number of SSBs is increased, for example, from 64 to 128 is assumed. In this case, even when 128 SSBs arranged in a time axis direction are divided into SSBs for aerial use and SSBs for terrestrial use and transmitted from the base station 200 in a time-division manner, both a terrestrial UE and a UAV UE have to wait a time from SSB index #0 to SSB index #127 when performing a cell search. For this reason, it is assumed that a time required for the cell search will increase for both the terrestrial UE and the UAV UE.

Consequently, in the second embodiment, first, a controller 130 of a base station 200 sets each of a plurality of SSBs that can be simultaneously transmitted at different frequencies within a cell band as a different SSB depending on the type. Second, a transmitter 210 of the base station 200 transmits configuration information indicating the settings.

When the type is an altitude, for example, the number of SSBs (for example, 128) is divided into SSBs for aerial use (for example, 64) and SSBs for terrestrial use (for example, 64). The transmitter 210 of the base station 200 then transmits the SSBs for aerial use and the SSBs for terrestrial use simultaneously using different frequencies.

For example, since the SSBs for aerial use and the SSBs for terrestrial use are transmitted simultaneously from the base station 200, a cell search time can be shortened compared to when the SSBs for aerial use and the SSBs for terrestrial use are transmitted in a time-division manner. In addition, it is possible to reduce power consumption in the UE 100.

Furthermore, for example, since the SSBs for aerial use and the SSBs for terrestrial use are transmitted from the base station 200 using different frequencies, interference can be suppressed when the UE 100 accesses the base station 200 (and also in subsequent communications), thereby enabling appropriate communication between the UE 100 and the base station 200.

Here, description is given of a setting method for setting a plurality of SSBs that can be simultaneously transmitted at different frequencies within a cell band so that they become different SSBs depending on the type (that is, a frequency-multiplexed SSB setting method).

### (1) Frequency-Multiplexed SSB Setting Method

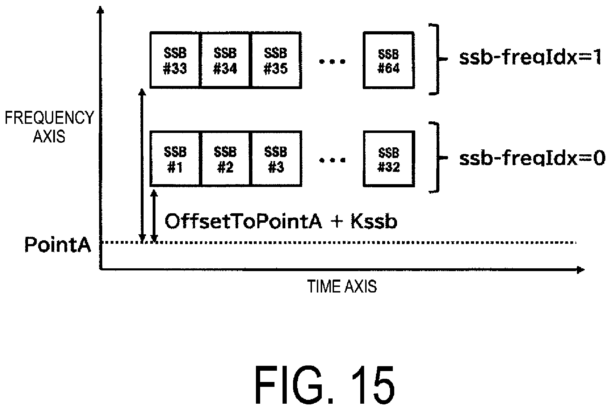

FIG. 15 is a diagram illustrating an example of a frequency-multiplexed SSB setting method according to the first embodiment.

As described in the first embodiment (FIG. 8), configuration information indicating SSB parameters (SSB transmission frequency) includes OffsetToPointA, Kssb (ssb-SubcarrierOffset), and absoluteFrequencySSB.

Consequently, the controller 230 of the base station 200 may set a plurality of pieces of OffsetToPointA (for example, N, where N represents a natural number equal to or greater than 2) within a cell band. Alternatively, the controller 230 may set a plurality of pieces of Kssb (ssb-SubcarrierOffset) within the cell band. Alternatively, the controller 230 may set a plurality of pieces of absoluteFrequencySSB within the cell band. That is, the controller 230 sets a plurality of SSB parameters (a plurality of SSB transmission frequencies) by using at least one of OffsetToPointA, Kssb (ssb-SubcarrierOffset), and absoluteFrequencySSB as a single SSB parameter (SSB transmission frequency). The transmitter 210 of the base station 200 transmits configuration information including a plurality of SSB parameters (a plurality of SSB transmission frequencies). That is, the transmitter 210 transmits configuration information including a plurality of SSB transmission frequencies. The SSB transmission frequency represents information regarding an SSB transmission frequency for each SSB. The transmitter 210 may transmit the configuration information using any of an MIB, an SIB, or an individual RRC message (for example, an RRC Reconfiguration message). A receiver 110 of the UE 100 receives the configuration information. Thereby, setting may be performed.

FIG. 15 illustrates an example in which two SSB groups (N = 2), that is, a first SSB group and a second SSB group, are set. Each SSB group includes at least one SSB. For example, the base station 200 may set the first SSB group as an SSB group for terrestrial use and the second SSB group as an SSB group for aerial use.

The controller 230 of the base station 200 may assign ssb-freqIdx to each SSB group to identify the SSB group. The ssb-freqIdx may be a unique number that starts from 0 and increments by one from a lower frequency side to a higher frequency side. The transmitter 210 of the base station 200 may transmit ssb-freqIdx to the UE 100 via a PBCH in an SSB. The UE 100 that has received the SSB can specify ssb-freqIdx of the received SSB (that is, the frequency from the bottom at which the received SSB is) based on the PBCH in the received SSB.

While FIG. 15 illustrates an example in which the total number of SSBs is "64", the total number of SSBs may also be "128". In this case, an SSB group represented by ssb-freqIdx = 0 may include "64" SSBs, and an SSB group represented by ssb-freqIdx = 1 may also include "64" SSBs.

### (2) Communication Method According to Second Embodiment

In the second embodiment, SSBs are set using frequency multiplexing, and each SSB group can be set to be an SSB group according to the type. For example, in FIG. 15, when the type is an altitude, an SSB group represented by ssb-freqIdx = 0 can be set to be an SSB group for terrestrial use, and an SSB group represented by ssb-freqIdx = 1 can be set to be an SSB group for aerial use. Alternatively, when the type is an absolute position in a space, an SSB group represented by ssb-freqIdx = 0 can be set to be an SSB group corresponding to a first area in a space, and an SSB group represented by ssb-freqIdx = 1 can be set to be an SSB group corresponding to a second area in a space. Information regarding which SSB each SSB group corresponds to depending on its type, such as whether an SSB group represented by ssb-freqIdx = 1 is an SSB group for aerial use or an SSB group for terrestrial use, can be transmitted (or set) to the UE 100, for example, as correspondence information along with ssb-freqIdx via the PBCH in the SSB. Alternatively, the correspondence information can be transmitted using an MIB, an SIB1, or an individual RRC message (for example, an RRC Reconfiguration message).

The transmitter 210 of the base station 200 may transmit an altitude threshold value, as in the first embodiment, to make it possible to specify altitudes for aerial use and terrestrial use. The controller 130 of the UE 100 can confirm its own altitude based on the altitude threshold value and specify an SSB group according to an altitude, as in the first embodiment. The transmitter 210 may transmit a spatial threshold value (for example, a latitude and a longitude) instead of the altitude threshold value as in the first embodiment, and the controller 130 of the UE 100 can specify an SSB group corresponding to an absolute position in a space based on the spatial threshold value.

### (3) Example of Bitmap Information

In the second embodiment, each SSB group is set to be an SSB group according to the type, and bitmap information indicating whether to transmit an SSB is set.

In the second embodiment, ssb-PositionInBurst is used as bitmap information. As described above, ssb-PositionInBurst represents, for example, the position of an SSB in a time domain. Specifically, ssb-PositionInBurst represents whether to transmit an SSB for each SSB index of SSBs (or an SSB transmittable timing) in an SS burst (one cycle period). ssb-PositionInBurst may include groupPresence and inOneGroup. Alternatively, in ssb-PositionInBurst, a bit representing whether an SSB is transmitted for each SSB index may be included for all SSB indices in an SS burst.

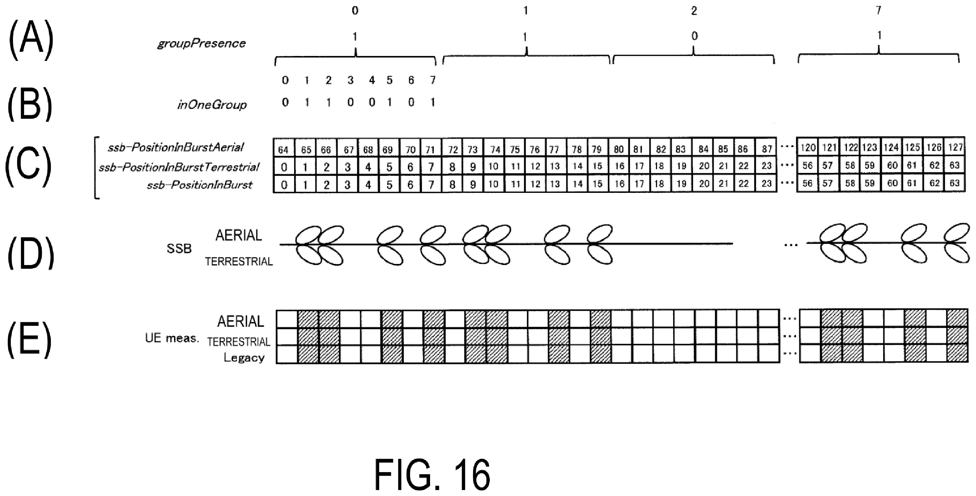

FIGs. 16(A) to 16(E) are diagrams illustrating an example of an SSB transmission operation according to the second embodiment.

FIGs. 16(A) to 16(E) illustrate an example in which the type is an altitude, and ssb-PositionInBurst for aerial use ("ssb-PositionInBurstAerial") and ssb-PositionInBurst for terrestrial use ("ssb-PositionInBurstTerrestrial") are set as ssb-PositionInBurst. In this case, both ssb-PositionInBurst for aerial use and ssb-PositionInBurst for terrestrial use may include the same groupPresence and inOneGroup. For this reason, as illustrated in FIG. 16(D), an SSB for aerial use and an SSB for terrestrial use are transmitted at the same timing. As in the first embodiment, in the controller 130 of the UE 100, ssb-PositionInBurst according to its own altitude can be applied using an altitude threshold value. When the controller 130 of the UE 100 determines that the UE itself is located in an aerial area, ssb-PositionInBurst for aerial use may be applied. In this case, the receiver 110 of the UE 100 can confirm groupPresence and inOneGroup included in ssb-PositionInBurst for aerial use to confirm whether an SSB is transmitted at the SSB transmission timing and receive an SSB at the SSB transmission timing. Confirming whether an SSB is transmitted using groupPresence and inOneGroup is the same as in the first embodiment. Furthermore, when the controller 130 of the UE 100 determines that the UE itself is located in a terrestrial area, ssb-PositionInBurst for terrestrial use is applied. Then, the receiver 110 of the UE 100 can receive an SSB at the SSB transmission timing by confirming groupPresence and inOneGroup included in ssb-PositionInBurst for terrestrial use.

As illustrated in FIG. 16(C), ssb-PositionInBurst of the related art ("ssb-PositionInBurst") may be set, apart from ssb-PositionInBurst for aerial use and ssb-PositionInBurst for terrestrial use. As in the first embodiment, it is possible to relieve a legacy UE that cannot process ssb-PositionInBurst for aerial use and ssb-PositionInBurst for terrestrial use. In this case, as illustrated in FIG. 16(E), the legacy UE determines whether an SSB is transmitted by using ssb-PositionInBurst of the related art, and receive the SSB.

### (4) Other Examples of Bitmap Information

Next, other examples of bitmap information will be described.

### (4-1) Another Example 1 of Bitmap Information

In the example of FIGs. 16(A) to 16(E), inOneGroup of the related art has been described for inOneGroup. As in the first embodiment, for inOneGroup, inOneGroup for aerial use (for example, "inOneGroupAerial") and inOneGroup for aerial use (for example, "inOneGroupTerrestrial") may be set. In this case, ssb-PositionInBurst for aerial use may include groupPresence and inOneGroup for aerial use, and ssb-PositionInBurst for terrestrial use may include groupPresence and inOneGroup for terrestrial use. Since inOneGroup is divided into inOneGroup for aerial use and inOneGroup for terrestrial use, the transmitter 210 of the base station 200 may transmit an SSB for aerial use and an SSB for terrestrial use at different timings. When the UE 100 determines that its own altitude is in an aerial area, it can receive an SSB transmitted for aerial use without receiving an SSB transmitted as an SSB for terrestrial use by confirming inOneGroup for aerial use included in ssb-PositionInBurst for aerial use. Furthermore, when the UE 100 determines that its own altitude is in a terrestrial area, it can receive an SSB transmitted for terrestrial use without receiving an SSB transmitted as an SSB for aerial use by confirming inOneGroup for terrestrial use included in ssb-PositionInBurst for terrestrial use.

### (4-2) Another Example 2 of Bitmap Information

Also, for groupPresence, as in the first embodiment, the controller 230 of the base station 200 may separately set groupPresence for aerial use (for example, "groupPresenceAerial") and groupPresence for terrestrial use ("groupPresenceTerrestrial"). In this case, ssb-PositionInBurst for aerial use includes inOneGroup and groupPresence for aerial use, while ssb-PositionInBurst for terrestrial use includes inOneGroup and groupPresence for terrestrial use. The controller 130 of the UE 100 may select ssb-PositionInBurst for aerial use or ssb-PositionInBurst for terrestrial use depending on its own altitude, and receive an SSB using groupPresence and inOneGroup included in the selected ssb-PositionInBurst.

### (4-3) Another Example 3 of Bitmap Information

Both inOneGroup and groupPresence may be set for aerial use and terrestrial use. That is, the controller 230 of the base station 200 may set inOneGroup for aerial use, inOneGroup for terrestrial use, groupPresence for aerial use, and groupPresence for terrestrial use. In this case, ssb-PositionInBurst for aerial use includes inOneGroup for aerial use and groupPresence for aerial use, and ssb-PositionInBurst for terrestrial use includes inOneGroup for terrestrial use and groupPresence for terrestrial use.

A UE 100 that is determined to be located in an aerial area can appropriately receive an SSB transmitted as an SSB for aerial use by confirming inOneGroup for aerial use and groupPresence for aerial use included in ssb-PositionInBurst for aerial use. Furthermore, a UE 100 that is determined to be located in a terrestrial area can appropriately receive an SSB transmitted as an SSB for terrestrial use by confirming inOneGroup for terrestrial use and groupPresence for terrestrial use included in ssb-PositionInBurst for terrestrial use.

### (4-4) Another Example 4 of Bitmap Information

While FIGs. 16(A) through 16(E) illustrate a case where an altitude is an example of the type, the type is not limited thereto and may be represented by an absolute position in a space as in the first embodiment. In this case, ssb-PositionInBurst is set to be ssb-PositionInBurst according to the type. For example, ssb-PositionInBurst corresponding to a first area (for example, "ssb-PositionInBurstFirstArea") may be used instead of ssb-PositionInBurst for aerial use ("ssb-PositionInBurstAerial") illustrated in FIG. 16(C), and ssb-PositionInBurst corresponding to a second area (for example, "ssb-PositionInBurstSecondArea") may be used instead of ssb-PositionInBurst for terrestrial use ("ssb-PositionInBurstTerrestrial"). Processing in the base station 200 and the UE 100 can also be performed in the same manner as the above-mentioned bitmap example by replacing ssb-PositionInBurst for aerial use with ssb-PositionInBurst corresponding to the first area and replacing ssb-PositionInBurst for terrestrial use with ssb-PositionInBurst corresponding to the second area. When the type is an absolute position in a space, a spatial threshold value (for example, a latitude and a longitude) may be transmitted from the base station 200 to the UE 100 instead of an altitude threshold value, as in the first embodiment.

### (4-5) Another Example 5 of Bitmap Information

FIGs. 16(A) to 16(E) illustrate an example in which ssb-PositionInBurst is set to be two types, that is, ssb-PositionInBurst for aerial use and ssb-PositionInBurst for terrestrial use, based on an altitude, but this is not limiting. Three or more pieces of ssb-PositionInBurst may be set as ssb-PositionInBurst based on an altitude. For example, three types of bitmap information, that is, ssb-PositionInBurst for aerial use, Issb-PositionInBurst for a medium altitude, and ssb-PositionInBurst for a high altitude, may be set. In this case, as in the first embodiment, the UE 100 may apply any one ssb-PositionInBurst based on a plurality of altitude threshold values.

Furthermore, even when the type is an absolute position in a space, three or more pieces of ssb-PositionInBurst may be set. For example, three types of bitmap information, that is, ssb-PositionInBurst for a first area, ssb-PositionInBurst for a second area, and ssb-PositionInBurst for a third area, may be set. In the UE, any one ssb-PositionInBurst may be applied based on a plurality of spatial threshold values.

### (4-6) Another Example 6 of Bitmap Information

For each ssb-PositionInBurst, as in the first embodiment, groupPresence and inOneGroup are not included, and a bit indicating whether an SSB is transmitted for each SSB index for all SSB indices in an SS burst may be included for all SSB indices. In this case, unlike FIG. 16(D), in the base station 200, a transmission pattern can be set in which, even at the same timing, an SSB for aerial use is transmitted but an SSB for terrestrial use is not transmitted, or an SSB for aerial use is not transmitted but an SSB for terrestrial use is transmitted. Even in such a case, the UE 100 can appropriately receive an SSB transmitted as an SSB for aerial use and can appropriately receive an SSB transmitted as an SSB for terrestrial use by applying ssb-PositionInBurst according to its own altitude.

### (5) Operation Example According to Second Embodiment

Next, an operation example according to the second embodiment will be described.

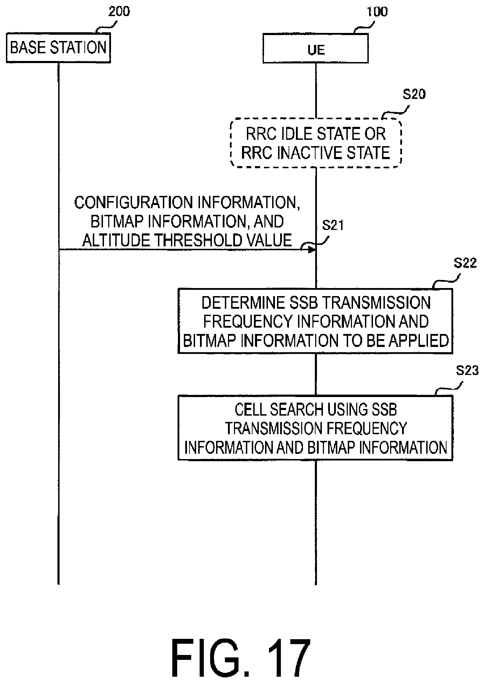

FIG. 17 is a diagram illustrating an operation example according to the second embodiment.

As illustrated in FIG. 17, in step S20, the UE 100 may be in an RRC idle state or an RRC inactive state.

In step S21, the transmitter 210 of the base station 200 transmits configuration information, bitmap information, and an altitude threshold value.

First, the configuration information may include a plurality of pieces of OffsetToPointA, that is, information indicating, in resource block units, a frequency offset between a subcarrier on the lowest frequency side of a corresponding SSB and a reference point of a resource block grid. Alternatively, the configuration information may include a plurality of pieces of Kssb (ssb-SubcarrierOffset), that is, information indicating, in subcarrier units, a frequency offset between a subcarrier on the lowest frequency side of a corresponding SSB and a boundary on a low frequency side of a resource block to which the subcarrier belongs. Alternatively, the configuration information may include a plurality of pieces of absoluteFrequencySSB (ARFCN), that is, information indicating the frequency of a corresponding SSB.

Second, the bitmap information includes bitmap information regarding ssb-PositionInBurst. ssb-PositionInBurst includes a plurality of pieces of ssb-PositionInBurst that differ depending on the type (specifically, an altitude or an absolute position in a space).

Third, when the type is an absolute value in a space, a spatial threshold value is transmitted instead of an altitude threshold value.

Fourth, the transmitter 210 of the base station 200 may transmit (broadcast) the configuration information, the bitmap information, and the altitude threshold value which are included in an MIB, may transmit (broadcast) them included in an SIB1, or may transmit (broadcast) them included in an individual RRC message (for example, an RRC release message). In the case of the individual RRC message, the UE 100 may transition from an RRC connected state to an RRC idle state (or an RRC inactive state) in response to receiving the individual RRC message. As shown in the current 3GPP specifications, some of the pieces of configuration information (Kssb (ssb-SubcarrierOffset)) may be transmitted using the MIB, and the rest of them may be transmitted using the SIB1. The receiver 110 of the UE 100 receives the configuration information, the bitmap information, and the altitude threshold value.

In step S22, the controller 130 of the UE 100 determines SSB transmission frequency information and bitmap information to be applied, based on the altitude threshold value.

In step S23, the receiver 110 of the UE 100 applies the determined SSB transmission frequency and bitmap information to receive an SSB and perform a cell search.

### (6) Another Operation Example According to Second Embodiment

In the second embodiment, a case where the number of SSBs is "128" in a half frame has been described. The number of SSBs may be other than "128", and "64", "256", "512", and the like may be used, for example. In this case, bitmap information of inOneGroup may be expressed as any bit length, such as 16 or 32 bits, rather than 8 bits, as in the first embodiment. As in the first embodiment, regarding groupPresence, it may also be indicated whether SSBs are transmitted for any number of consecutive SSB indices, such as 16 or 32 SSB indices, rather than for every 8 consecutive SSB indices (that is, one group).

### Third Embodiment

Next, a third embodiment will be described. In the third embodiment, differences from the first and second embodiments will be mainly described.

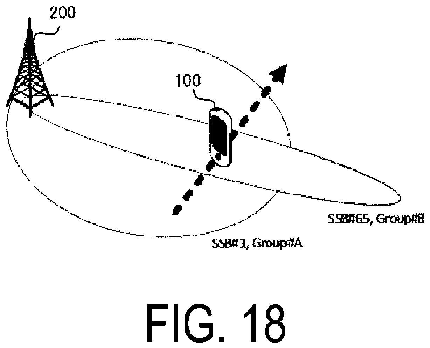

FIG. 18 is a diagram illustrating a scenario according to the third embodiment. The following scenario is assumed. That is, a base station 200 simultaneously transmits SSB #1 included in an SSB group A and SSB #65 included in an SSB group B using different frequencies. The base station 200 transmits the SSB group A using a wide beam and transmits the SSB group B using a narrow beam. A wide beam is a beam with a beam width equal to or greater than a certain level. A narrow beam is a beam with a beam width less than a certain level. While a UE 100 is moving at a speed equal to or greater than a certain level (that is, high speed), it initiates a random access procedure to a network at a point illustrated in FIG. 18.

In the above scenario, the UE 100 is expected to select SSB #65 of a narrow beam at the point illustrated in FIG. 18 since an RSRP measurement value of SSB #1 is higher than an RSRP measurement value of SSB #65. However, when the UE 100 selects SSB #65, there is a possibility that the UE 100 will move outside a narrow beam area during the random access procedure (or cell search), causing the random access procedure (or cell search) to fail. For this reason, when considering the movement state of the UE 100, the UE 100 should select SSB #1 of a wide beam.

In the third embodiment, as in the second embodiment, a plurality of SSB groups are simultaneously transmitted using different frequencies for SSBs. In this case, for example, the SSB group A is transmitted using a wide beam, and the SSB group B is transmitted using a narrow beam. That is, SSBs can be set as different SSB groups depending on a beam type. The beam type may include a wide beam and a narrow beam. Alternatively, the beam type may include three or more types of beams including a wide beam and a narrow beam. In the third embodiment, the base station 200 transmits priority information to the UE 100 to enable the UE 100 to select the SSB group A in preference to the SSB group B.

Specifically, a controller 230 of the base station 200 sets each of a plurality of synchronization signal blocks that can be simultaneously transmitted at different frequencies within a cell band as a different synchronization signal block in accordance with a beam type. Then, a transmitter 210 of the base station 200 transmits priority information indicating information for prioritizing a second synchronization signal block group over a first synchronization signal block group for the first synchronization signal block group and the second synchronization signal block group that are set as different synchronization signal block groups for each frequency.

For example, by grouping SSBs according to a beam type, each of a plurality of SSB groups can be transmitted from the base station 200 using narrow beams and wide beams. Then, for example, based on the priority information, the UE 100 selects a wide beam in preference to a narrow beam and performs a cell search and a random access procedure using SSBs transmitted using the wide beam. Thereby, the cell search and the random access procedure can be performed continuously without interruption, even when the UE 100 is moving at high speed. The cell search is performed continuously without interruption in this manner, and thus, also in the third embodiment, it is possible to improve the efficiency of the cell search and reduce the power consumption of the UE 100 as in the third embodiment.

Here, SSB groups corresponding to beam types used in the third embodiment are described.

### (1) SSB Group According to Beam Type

As described in the second embodiment, a plurality of SSB groups that can be simultaneously transmitted at different frequencies can be set using configuration information including a plurality of pieces of SSB transmission frequency information (FIG. 15). The configuration information may include at least one of a plurality of pieces of OffsetToPointA, a plurality of pieces of Kssb (ssb-SubcarrierOffset), and a plurality of pieces of absoluteFrequencySSB (ARFCN).

For example, when two SSB groups are set, the base station 200 transmits SSBs included in one SSB group using a wide beam and transmits SSBs included in the other SSB group using a narrow beam. The base station 200 may form wide and narrow beams using a known beamforming technique or the like. When the base station 200 sets three or more SSB groups, it may transmit the SSB groups using different beam types.

In this manner, the controller 230 of the base station 200 groups the SSBs into a plurality of SSB groups and sets a beam type to be used to transmit each SSB group. Thereby, the transmitter 210 of the base station 200 can transmit each SSB group corresponding to a beam type in accordance with the settings. The transmitter 210 may transmit configuration information as in the second embodiment. The transmitter 210 may also transmit beam type information indicating a beam type to be used to transmit each SSB group. The beam type information may be transmitted using an MIB, SIB, or an individual RRC message (for example, an RRC reconfiguration message). A receiver 110 of the UE 100 may receive the beam type information.

### (2) Priority Information

In the third embodiment, priority information is applied to enable the UE 100 to select a certain SSB group in preference to another SSB group.

First, the priority information includes condition information indicating conditions for determining the state of the UE 100. Specifically, the condition information may be a speed threshold value related to a moving speed of the UE 100. For example, the controller 130 of the UE 100 determines that the UE 100 is in a high-mobility state when the moving speed of the UE 100 is equal to or greater than a speed threshold value, and determines that the UE 100 is not in a high-mobility state when the moving speed of the UE 100 is less than the speed threshold value. The moving speed may be represented by a relative speed of the UE 100 with respect to the base station 200. Alternatively, the condition information may indicate that the UE 100 is in an on-board state. The on-board state may be detected, for example, when an application layer of the UE 100 notifies an AS layer of the UE 100 that the UE 100 is in an on-board state. For example, the application layer of the UE 100 may detect that the UE 100 has passed through an automatic ticket gate at a station, and give a notification of the on-board state.

The condition information may be associated with an SSB group. The condition information may be associated with the SSB group A when the UE 100 is in a high-mobility state (or an on-board state), and the condition information may be associated with the SSB group B when the UE 100 is not in a high-mobility state (or not in an on-board state). In this case, when the UE 100 determines that it is in a high-mobility state (or an on-board state) based on the condition information, the UE 100 selects the SSB group A. When the UE 100 is not in a high-mobility state (or an on-board state), the UE 100 selects the SSB group B.

Second, the priority information includes priority method information indicating a method for prioritizing an SSB group over other SSB groups. Specifically, the priority method information may be information indicating exclusive selection, indicating that, when a certain SSB group is selected based on the condition information, other SSB groups are not selected. For example, when the SSB group A is selected based on the condition information, the priority method information may be information indicating that the SSB group A is selected and the other SSB group B is not selected. Alternatively, the priority method information may be information indicating the priority of each SSB group. For example, the priority of the SSB group A may be "7", the priority of the SSB group B may be "3", and the priority of an SSB group C may be "0". Alternatively, the priority method information may be an offset value for a reception quality value. For example, when the SSB group A is selected based on the condition information, an offset value of "6 dB" may be applied to the reception quality values of SSBs included in the SSB group A, and no offset value may be applied to the reception quality values of SSBs included in other SSB groups. The reception quality value may be represented by an RSRP, may be represented by a Received Signal Strength Indicator (RSSI), or may be represented by a Reference Signal Received Quality (RSRQ) or a Signal to Interference plus Noise Ratio (SINR).

The priority method information may be associated with each SSB group. For example, when the SSB group A is selected based on the condition information, the information indicating the priority may indicate that the priority of the SSB group A is "7" and the priority of the SSB group B is "3". However, when the SSB group B is selected based on the condition information, the information indicating the priority may indicate that the priority of the SSB group A is "3" and the priority of the SSB group B is "7". In this manner, a different priority may be assigned depending on an SSB group selected based on the condition information. Even when the priority method information includes an offset value for a reception quality value, a different offset value may be applied depending on an SSB group selected based on the condition information.

The priority method information may be associated with the condition information. For example, information indicating a priority (or an offset value for a reception quality value) when the moving speed of the UE 100 is equal to or greater than a threshold value may be different from information indicating a priority (or an offset value for a reception quality value) when the moving speed of the UE 100 is less than the threshold value. Alternatively, for example, information indicating a priority when the UE 100 is in an on-board state (or an offset value for a reception quality value) may be different from information indicating a priority when the UE 100 is not in an on-board state (or an offset value for a reception quality value).

### (3) Bitmap Information According to Beam Type

In the third embodiment, a plurality of pieces of bitmap information according to a beam type may be set. The bitmap information may be ssb-PositonInBurst. In this case, as in the second embodiment, a different ssb-PositonInBurst is set depending on a beam type.

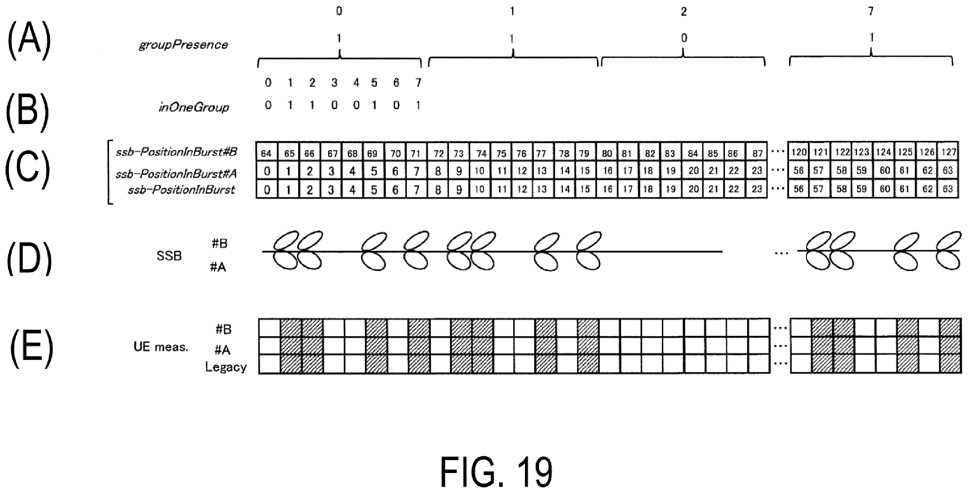

FIGs. 19(A) to 19(E) are diagrams illustrating an example of an SSB transmission operation according to the third embodiment. FIG. 19(C) illustrates an example in which ssb-PositonInBurst for a wide beam ("A" in "ssb-PositonInBurstA" may be "Wide") and ssb-PositonInBurst for a narrow beam ("B" in "ssb-PositonInBurstB" may be "Narrow") are set. When SSBs (or a group of SSBs) using a wide beam and SSBs (or a group of SSBs) using a narrow beam are simultaneously transmitted at different frequencies, it is indicated whether an SSB is transmitted for each beam type by ssb-PositonInBurst for a wide beam and ssb-PositonInBurst for a narrow beam.

Other examples of bitmap information described in the first and second embodiments may be used for the bitmap information.

That is, also in the third embodiment, as illustrated in FIG. 19(C), ssb-PositionInBurst ("ssb-PositionInBurst") of the related art may be set for a legacy UE that cannot process ssb-PositionInBurst for a wide beam and ssb-PositionInBurst for a narrow beam.

Furthermore, for groupPresence, groupPresence for a wide beam (for example, "groupPresenceWide") and groupPresence for a narrow beam (for example, "groupPresenceNarrow") may be set.

Alternatively, for inOneGroup, inOneGroup for a wide beam (for example, "inOneGroupWide") and inOneGroup for a narrow beam (for example, "inOneGroupNarrow") may be set.

Alternatively, for both groupPresence and inOneGroup, groupPresence and inOneGroup for a wide beam and a narrow beam may be set. That is, ssb-PositonInBurst for a wide beam includes groupPresence for a wide beam and groupPresence for a narrow beam. Furthermore, ssb-PositonInBurst for a narrow beam may include groupPresence for a narrow beam and inOneGroup for a narrow beam.

Alternatively, ssb-PositionInBurst may be bitmap information that does not include groupPresence and inOneGroup, and indicates with bits whether an SSB is transmitted for each SSB index in a burst.

Alternatively, three or more different types of ssb-PositionInBurst may be set depending on a beam type. Alternatively, a plurality of pieces of ssb-PositionInBurst may be grouped not only on a frequency axis, but also on a time axis. For example, when a wide beam and a narrow beam are transmitted in a time-division manner, ssb-PositionInBurst for a wide beam and ssb-PositionInBurst for a narrow beam may be set (or transmitted).

### (4) Operation Example According to Third Embodiment

Next, an operation example according to the third embodiment will be described.

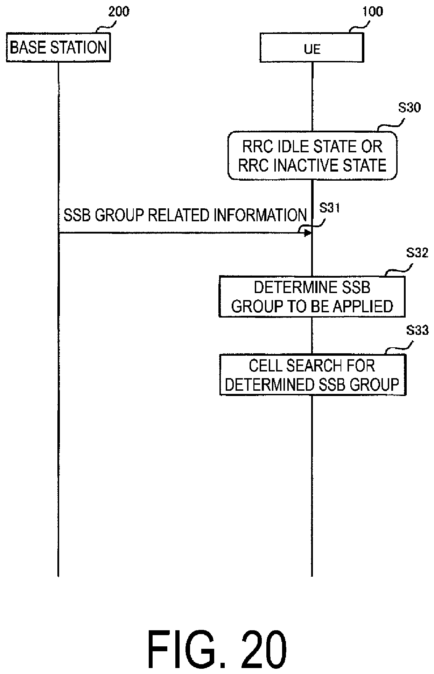

FIG. 20 is a diagram illustrating an operation example according to the third embodiment.

In step S30, the UE 100 is in an RRC idle state or an RRC inactive state, as illustrated in FIG. 20.

In step S31, the transmitter 120 of the base station 200 transmits SSB group related information. The SSB group related information includes configuration information, bitmap information, and priority information. The transmitter 120 may transmit the SSB group related information using an MIB or an SIB. The transmitter 120 may transmit a part of the configuration information (for example, Kssb (ssb-SubcarrierOffset)) using an MIB, and may transmit the remaining part of the configuration information using an SIB1. The receiver 110 of the UE 100 receives the SSB group related information.

In step S32, the controller 130 of the UE 100 selects an SSB group based on the priority information.

First, the controller 130 specifies the state of the UE 100 itself based on condition information included in the priority information. For example, the controller 130 measures its own moving speed using a GNSS receiver, a speed sensor, or the like. The controller 130 determines whether the UE 100 is in a high-mobility state based on a speed threshold value included in the condition information. Alternatively, when the condition information indicates an on-board state, the controller 130 may determine whether there is a notification of the on-board state from the application layer.

Second, the controller 130 selects an SSB group associated with the condition information. For example, when the controller 130 determines that its own state is a high-mobility state, the controller 130 may select an SSB group associated with a high-mobility state (for example, the SSB group A for a wide beam). When its own state is not a high-mobility state, the controller 130 may select another SSB group (for example, the SSB group B for a narrow beam). For example, when its own state is an on-board state, the controller 130 may select an SSB group associated with an on-board state (for example, the SSB group A for a wide beam). When its own state is not an on-board state, the controller 130 may select another SSB group (for example, the SSB group B for a narrow beam).

Third, the controller 130 selects an SSB group in accordance with priority method information included in the priority information.

For example, when the priority method information includes exclusive information, the controller 130 selects an SSB group selected based on the condition information and does not select other SSB groups. For example, when the controller 130 selects the SSB group A for a wide beam based on the condition information, the controller 130 selects the SSB group A for a wide beam in accordance with the exclusion information and does not select the SSB group B for a narrow beam.

Alternatively, when the priority method information includes a priority, the controller 130 selects an SSB group with the highest priority. For example, when the controller 130 selects the SSB group A for a wide beam in accordance with the condition information, the controller 130 applies information indicating the priority associated with the SSB group A (the priority of the SSB group A is "7" and the priority of the SSB group B is "3") to select the SSB group A for a wide beam with the highest priority. For example, when the controller 130 selects the SSB group B for a narrow beam in accordance with the condition information, the controller 130 applies information indicating the priority associated with the SSB group B (the priority of the SSB group A is "3" and the priority of the SSB group B is "7") to select the SSB group B for a narrow beam with the highest priority.

Alternatively, when the priority method information includes an offset value for a reception quality value, the controller 130 determines an offset value for a reception quality for each SSB group. For example, when the controller 130 selects the SSB group A for a wide beam in accordance with the condition information, it determines to apply an offset value associated with the SSB group A (for example, apply an offset value of "6 dB" to reception quality values for SSBs of the SSB group A, and do not apply an offset value to reception quality values for SSBs of the SSB group B). For example, when the controller 130 selects the SSB group B for a narrow beam in accordance with the condition information, it determines to apply an offset value associated with the SSB group B (for example, do not apply an offset value to the reception quality values for the SSBs of the SSB group A, and apply an offset value of "6 dB" to the reception quality values for the SSBs of the SSB group B). The offset value is applied when actually measuring a reception quality during a cell search.

In step S33, the transmitter 120 of the UE 100 receives the SSBs included in the SSB group selected in step S32. At this time, the transmitter 120 receives the SSBs in accordance with the bitmap information. Specifically, when the transmitter 120 selects the SSB group A for a wide beam in step S32, it receives the SSBs transmitted using a wide beam at the timing of each SSB index (that is, a transmission timing of each SSB) using ssb-PositionInBurst for a wide beam. Alternatively, when the transmitter 120 selects the SSB group B for a narrow beam in step S32, it receives the SSBs transmitted using a narrow beam at the timing of each SSB index (that is, a transmission timing of each SSB) using ssb-PositionInBurst for a narrow beam. In this case, when an offset value of a reception quality is included as priority method information, the controller 130 (or the receiver 110) applies the offset value to the reception quality (for example, an RSRP measurement value) of the received SSB and selects any one of the plurality of SSB groups.

The controller 130 (or the receiver 110) then selects an SSB with the highest reception quality from the selected SSB group. Thereafter, the controller 130 performs a random access procedure using a PRACH resource (specifically, an RA occasion) associated with the selected SSB, and executes a procedure for establishing an RRC connection with the base station 200 (for example, an RRC setup procedure or an RRC resume procedure).

For example, in the scenario illustrated in FIG. 18, when the moving speed of the UE 100 satisfies the condition information (for example, the moving speed is equal to or greater than a speed threshold value), the SSB group A for a wide beam can be selected in accordance with the preferred method information (for example, priority). Thereby, the UE 100 can perform a cell search using SSB #1 of the SSB group A transmitted using a wide beam, and perform a random access procedure using the SSB. In this case, the UE 100 does not use SSB #65 of the SSB group B transmitted using a narrow beam, and can thus continuously perform the cell search and the random access procedure. Thereby, for example, the UE 100 can efficiently perform the cell search and the random access procedure without interruption, and thus can appropriately communicate with the base station 200.

### (5) Another Operation Example 1 According to Third Embodiment

In the third embodiment, an example has been described in which priority selection is performed in SSB group units based on priority information. For example, the priority selection may be performed in SSB units based on the priority information. For example, condition information may be associated with each SSB, and the controller 130 of the UE 100 may select any one SSB when the state of the UE 100 satisfies the condition information, and select another SSB when the state of the UE 100 does not satisfy the condition information. The priority of the priority method information may also be set in SSB units, and an offset value for a reception quality of an SSB may also be set in SSB units.

### (6) Another Operation Example 2 According to Third Embodiment

In the third embodiment, a case where the number of SSBs is "128" in a half frame has been described. The number of SSBs may be other than "128", and "256", "512", and the like may be used, for example. In this case, bitmap information of inOneGroup may be expressed as any bit length, such as 16 or 32 bits, rather than 8 bits. With regard to groupPresence, it may also be indicated whether SSBs are transmitted for any number of consecutive SSB indices, such as 16 or 32 SSB indices, rather than for every 8 consecutive SSB indices (that is, one group).

### Fourth Embodiment

Next, a fourth embodiment will be described. In the fourth embodiment, differences from the first to third embodiments will be mainly described.

When a distance from a base station 200 is less than a distance threshold value (that is, a short distance), the reception quality of a UE 100 is sufficient, and thus there is no significant difference in reception quality whether the UE 100 selects a wide beam or a narrow beam. Strictly speaking, at the same point, the reception quality of a narrow beam is higher than that of a wide beam, and thus the UE 100 is more likely to select a narrow beam. For this reason, as described in the third embodiment, it is desirable for the UE 100 to select a wide beam in accordance with priority information when it is in a high-mobility state.

Generally, a beam formed in the base station 200 becomes wider as a distance from the base station 200 increases. For this reason, when the distance from the base station 200 is equal to or greater than the distance threshold value (that is, a long distance), even when the UE 100 selects a narrow beam, beam switching is less likely to occur than when the distance from the base station 200 is less than the distance threshold value.

From the perspective of the distance from the base station 200, it can be said that it is sufficient to preferentially use a wide beam for UEs 100 whose distance from the base station 200 is less than the distance threshold value. It can also be said that a narrow beam is preferentially used for UEs 100 whose distance from the base station 200 is equal to or greater than the distance threshold value.

### (1) Bitmap Information

Consequently, in the fourth embodiment, first, the base station 200 sets a plurality of types of bitmap information that differ depending on the relative position of the UE 100 with respect to the base station 200. Specifically, the transmitter 210 of the base station 200 transmits a plurality of types of bitmap information that indicate whether to transmit a synchronization signal block within an SS burst period (one frequency period) of a predetermined frequency, and that differ depending on the relative position of the UE 100 with respect to the base station 200.

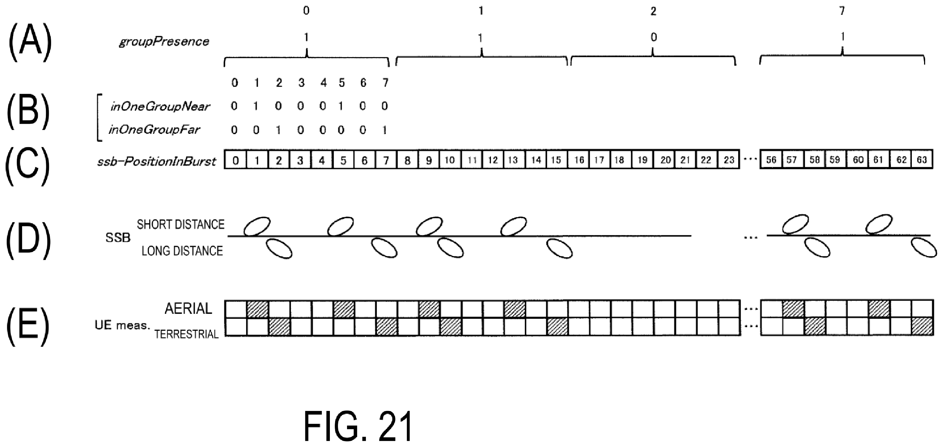

FIGs. 21(A) to 21(E) are diagrams illustrating an example of an SSB transmission operation according to the fourth embodiment. A relative position may be a distance of the UE 100 to the base station 200. As the bitmap information in the fourth embodiment, a plurality of types of bitmap information that differ depending on a distance are set. Specifically, bitmap information for a short distance and bitmap information for a long distance may be set.

FIG. 21(B) illustrates an example in which, for inOneGroup, inOneGroup for a long distance ("inOneGroupFar") and inOneGroup for a short distance ("inOneGroupNear") are set as bitmap information. A distance threshold value for specifying either inOneGroup for a long distance or inOneGroup for a short distance in the UE 100 is transmitted from the transmitter 210 of the base station 200. The controller 130 of the UE 100 specifies either inOneGroup for a long distance or inOneGroup for a short distance based on the distance threshold value. The controller 130 measures a distance to the base station 200 using a GNSS reception function, RF fingerprint, Timing Advance, or the like. The controller 130 then compares the measured distance with the distance threshold value to determine which inOneGroup is to be applied.

As illustrated in FIG. 21(D), the base station 200 transmits SSBs for a long distance and SSBs for a short distance in a time-division manner. The UE 100 that has determined to apply inOneGroup for a long distance can receive SSBs for a long distance without receiving SSBs for a short distance by confirming inOneGroup for a long distance in the receiver 110. The UE 100 that has determined to apply inOneGroup for a short distance can receive SSBs for a short distance without receiving SSBs for a long distance by confirming inOneGroup for a short distance in the receiver 110.

Similarly, regarding groupPresence, a plurality of pieces of groupPresence that differ depending on a relative position may be set as bitmap information.

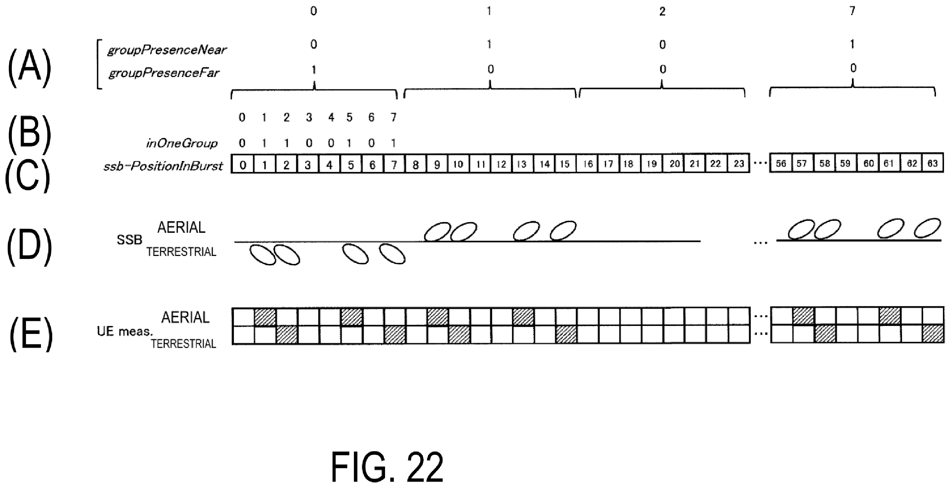

FIGs. 22(A) to 22(E) are diagrams illustrating an example of an SSB transmission operation according to the fourth embodiment. FIG. 22(A) illustrates an example in which groupPresence for a long distance ("groupPresenceFar") and groupPresence for a short distance ("groupPresenceNear") are set. The controller 130 of the UE 100 specifies either groupPresence for a long distance or groupPresence for a short distance based on the distance threshold value and determines which groupPresence is to be applied. The UE 100 that has determined to apply groupPresence for a long distance confirms groupPresence for a long distance by the receiver 110 (or the controller 130). In the case of "1", the UE 100 determines that SSB transmission occurs in the group. Furthermore, the UE 100 confirms inOneGroup within the group to confirm whether SSB transmission occurs in SSB index units. The UE 100 that has determined to apply groupPresence for a short distance confirms groupPresence for a short distance by the receiver 110. In the case of "1", the UE 100 determines that SSB transmission occurs in the group. Furthermore, the UE 100 confirms inOneGroup within the group to confirm whether SSB transmission occurs in SSB index units. In the case of "0" regardless of whether it is groupPresence for a long distance or groupPresence for a short distance, the receiver 110 of the UE 100 determines that no SSB transmission occurs in the group, and does not confirm inOneGroup.

Thereby, for example, by using bitmap information according to a distance, the UE 100 can appropriately receive SSBs transmitted at a timing that varies depending on a distance and can efficiently execute a cell search.

With regard to bitmap information, as in the first embodiment, both inOneGroup and groupPresence may be included for a long distance and a short distance. As in the first embodiment, inOneGroup of the related art and/or groupPresence of the related art may be transmitted to the UE 100 as bitmap information to relieve legacy UEs. Other examples of bitmap information regarding inOneGroup and groupPresence may be applied to the fourth embodiment as in the first embodiment.

### (2) Setting Information

In the fourth embodiment, secondly, the base station 200 may set a plurality of SSB groups that can be transmitted simultaneously using different frequencies within a cell band, and may set each of the plurality of SSB groups to an SSB group that varies depending on a relative position.

Specifically, the controller 230 of the base station 200 may set an SSB group for a long distance and an SSB group for a short distance. The transmitter 210 of the base station 200 simultaneously transmits SSBs included in the SSB group for a long distance and SSBs included in the SSB group for a short distance using different frequencies. The transmitter 210 can perform setting (or transmission) for the UE 100 by using configuration information, as in the second embodiment. The configuration information may include a plurality of pieces of OffsetToPointA, as in the second embodiment. Alternatively, the configuration information may include a plurality of pieces of Kssb (ssb-SubcarrierOffset). Alternatively, the configuration information may include a plurality of pieces of absoluteFrequencySSB.

In the fourth embodiment, bitmap information corresponding to each SSB group may be set, as in the second embodiment.

For example, in FIG. 19(C), "ssb-PositionInBurst#A" may be set to be ssb-PositionInBurst for a short distance (for example, "ssb-PositionInBurstNear"), and "ssb-PositionInBurst#B" may be set to be ssb-PositionInBurst for a long distance (for example, "ssb-PositionInBurstFar"). As illustrated in FIG. 19(D), the transmitter 210 of the base station 200 simultaneously transmits SSBs for a short distance and SSBs for a long distance using different frequencies. At this time, the transmitter 210 transmits the SSBs for a short distance using a wide beam and transmits the SSBs for a long distance using a narrow beam.

The controller 130 of the UE 100 specifies either ssb-PositionInBurst for a short distance or ssb-PositionInBurst for a long distance based on a distance threshold value, and determines to apply either one. When it is determined to apply ssb-PositionInBurst for a short distance, the receiver 110 of the UE 100 confirms inOneGroup and groupPresence included in ssb-PositionInBurst for a short distance, and confirms whether an SSB is transmitted for each SSB index (that is, for each SSB transmittable timing). On the other hand, when it is determined to apply ssb-PositionInBurst for a long distance, the receiver 110 confirms inOneGroup and groupPresence included in ssb-PositionInBurst for a long distance, and confirms whether an SSB is transmitted for each SSB index (that is, for each SSB transmittable timing). The receiver 110 receives an SSB at an SSB transmission timing.

Thereby, for example, even when the UE 100 is located at a "long distance" from the base station 200, an SSB is transmitted using a narrow beam, making beam switching less likely to occur in the UE 100 compared to a case where an SSB is transmitted using a narrow beam when the UE 100 is located at a "short distance". For this reason, the UE 100 can continuously perform a cell search and efficiently perform the cell search.

Also in the fourth embodiment, as in the second embodiment, even when the number of SSBs increases, the SSBs are transmitted simultaneously using different frequencies. Thus, in the UE 100, it is possible to shorten a time required for a cell search compared to receiving different SSBs in a time-division manner, and improve the efficiency of the cell search.

With regard to ssb-PositionInBurst, other examples of ssb-PositionInBurst described in the first embodiment can also be applied to the fourth embodiment, such as transmitting ssb-PositionInBurst of the related art from the base station 200 to relieve legacy UEs. For example, ssb-PositionInBurst may be grouped on a time axis, as in the third embodiment. For example, when SSBs for a long distance and SSBs for a short distance are transmitted in a time-division manner, ssb-PositionInBurst for a short distance and ssb-PositionInBurst for a long distance may be set (or transmitted).

### (3) Operation Example According to Fourth Embodiment

An operation example according to the fourth embodiment can be implemented by replacing "altitude-specific bitmap information" with "bitmap information according to a relative position" and "altitude threshold value" with "distance threshold value" in the operation example described in the first embodiment (FIG. 14).

The operation example according to the fourth embodiment can be implemented by replacing "altitude threshold value" with "distance threshold value" in the operation example described in the second embodiment (FIG. 17). In this case, the configuration information becomes configuration information for a plurality of SSB groups that differ depending on a relative position (for example, a distance). The bitmap information becomes a plurality of bitmap information that differ depending on a relative position (for example, a distance).

### (4) Other Operation Examples According to Fourth Embodiment

In the fourth embodiment, a case where the number of SSBs is "64" or "128" in a half frame has been described. The number of SSBs may be other numbers, and "256", "512", and the like may be used, for example. In this case, bitmap information of inOneGroup may be expressed as any bit length, such as 16 or 32 bits, rather than 8 bits. With regard to groupPresence, it may also be indicated whether SSBs are transmitted for any number of consecutive SSB indices, such as 16 or 32 SSB indices, rather than for every 8 consecutive SSB indices (that is, one group).

### Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the example in which the base station is an NR base station (gNB) has been described in the embodiments described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

The term "network node" mainly means a base station, but may also mean a core network apparatus or a part (CU, DU, or RU) of the base station. The network node may include a combination of at least a part of the core network apparatus and at least a part of the base station.

A program causing a computer to execute each processing performed by the UE 100 or the base station 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, but may be, for example, a recording medium such as a CD-ROM or a DVD-ROM. A circuit that executes each processing performed by the UE 100 or the base station 200 may be integrated, and at least a part of the UE 100 or the base station 200 may be configured as a semiconductor integrated circuit (chip set or SoC).

The phrases "based on" and "depending on/in response to" used in the present disclosure do not mean "based only on" and "only depending on/in response to" unless specifically stated otherwise. The phrase "based on" means both "based only on" and "based at least in part on". Similarly, the phrase "depending on" means both "only depending on" and "at least partially depending on". The terms "include", "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variations can be made without departing from the gist of the present disclosure. The embodiments, the operation examples, or the different types of processing may be combined as appropriate as long as they are not inconsistent with each other.

The functions achieved by the UE 100 or the base station 200 (network node) may be implemented in a circuitry or a processing circuitry programmed to achieve the described functions, including a general-purpose processor, a special-purpose processor, an integrated circuit, Application Specific Integrated Circuits (ASICs), a Central Processing Unit (CPU), a conventional circuit, and/or combinations thereof. The processor may include transistors and other circuits and may be considered a circuitry or a processing circuitry. The processor may be a programmed processor that executes a program stored in the memory.

As used herein, a circuitry, a unit, means are hardware programmed to achieve, or hardware performing, the described functions. The hardware may be any hardware disclosed herein or any hardware programmed to achieve or known to perform the described functions.

When the hardware is a processor that is considered to be a type of circuitry, the circuitry, means, or a unit is a combination of hardware and software used to configure the hardware and/or the processor.

### Supplementary Notes

### Supplementary Note 1

A network node that manages a cell in a mobile communication system, the network node including:
a controller configured to configure a plurality of synchronization signal blocks that can simultaneously be transmitted at different frequencies within a band of the cell, as synchronization signal blocks that differ depending on type; and
a transmitter configured to transmit configuration information indicating the configuration.

### Supplementary Note 2

The network node according to Supplementary Note 1, wherein the configuration information includes transmission frequency information indicating, for each synchronization signal block, information regarding the frequency of the synchronization signal block.

### Supplementary Note 3

The network node according to Supplementary Note 1 or 2, wherein
the type is an altitude,
the plurality of synchronization signal blocks include a synchronization signal block for aerial use and a synchronization signal block for terrestrial use, and
the transmitter transmits an altitude threshold value for specifying, in a user equipment, either the synchronization signal block for aerial use or the synchronization signal block for terrestrial use.

### Supplementary Note 4

The network node according to any one of Supplementary Notes 1 to 3, wherein
the type is an absolute position in a space,
the plurality of synchronization signal blocks include a synchronization signal block corresponding to a first area in a space and a synchronization signal block corresponding to a second area in a space, and
the transmitter transmits a spatial threshold value for specifying, in a user equipment, either the synchronization signal block corresponding to the first area or the synchronization signal block corresponding to the second area.

### Supplementary Note 5

The network node according to any one of Supplementary Notes 1 to 4, wherein the transmitter transmits a plurality of types of bitmap information that indicate whether to transmit the synchronization signal block at each transmittable timing of the synchronization signal block within one cycle period, the plurality of types of bitmap information differing for each frequency depending on the type.

### Supplementary Note 6

The network node according to any one of Supplementary Notes 1 to 5, wherein
the type is an altitude,
the plurality of types of bitmap information include bitmap information for aerial use and bitmap information for terrestrial use, and
the transmitter transmits an altitude threshold value for specifying either the bitmap information for aerial use or the bitmap information for terrestrial use.

### Supplementary Note 7

The network node according to any one of Supplementary Notes 1 to 6, wherein
the type is an absolute position in a space,
the plurality of types of bitmap information include bitmap information corresponding to a first area in a space and bitmap information corresponding to a second area in a space, and
the transmitter transmits a spatial threshold value for specifying either the bitmap information corresponding to the first area or the bitmap information corresponding to the second area.

### Supplementary Note 8

The network node according to any one of Supplementary Notes 1 to 7, wherein the plurality of types of bitmap information include at least bitmap information for aerial use and bitmap information for the user equipment that is not able to process the bitmap information for aerial use.

### Supplementary Note 9

The network node according to any one of Supplementary Notes 1 to 8, wherein the bitmap information is ssb-PositonInBurst.

### Supplementary Note 10

A user equipment that performs wireless communication with a network node that manages a cell in a mobile communication system, the user equipment including a receiver configured to receive, from the network node, configuration information for configuring a plurality of synchronization signal blocks that can simultaneously be transmitted at different frequencies within a band of the cell, as synchronization signal blocks that differ depending on type.

### Supplementary Note 11

The user equipment according to Supplementary Note 10, wherein the configuration information includes transmission frequency information indicating, for each synchronization signal block, information regarding the frequency of the synchronization signal block.

### Supplementary Note 12

The user equipment according to Supplementary Note 10 or 11, wherein the type is an altitude,
the plurality of synchronization signal blocks include a synchronization signal block for aerial use and a synchronization signal block for terrestrial use,
the receiver receives an altitude threshold value from the network node, and
the user equipment further includes a controller that specifies either the synchronization signal block for aerial use or the synchronization signal block for terrestrial use based on the altitude threshold value.

### Supplementary Note 13

The user equipment according to any one of Supplementary Notes 10 to 12, wherein the type is an absolute position in a space,
the plurality of synchronization signal blocks include a synchronization signal block corresponding to a first area in a space and a synchronization signal block corresponding to a second area in a space,
the receiver receives a spatial threshold value from the network node, and
the user equipment further includes a controller that specifies either the synchronization signal block corresponding to the first area or the synchronization signal block corresponding to the second area based on the spatial threshold value.

### Supplementary Note 14

The user equipment according to any one of Supplementary Notes 10 to 13, wherein the receiver receives, from the network node, a plurality of types of bitmap information that indicate whether to transmit the synchronization signal block at each transmittable timing of the synchronization signal block within one cycle period, the plurality of types of bitmap information differing for each frequency depending on the type.

### Supplementary Note 15

The user equipment according to any one of Supplementary Notes 10 to 14, wherein the type is an altitude,
the plurality of types of bitmap information include bitmap information for aerial use and bitmap information for terrestrial use,
the receiver receives an altitude threshold value from the network node, and
the user equipment further includes a controller that specifies either the bitmap information for aerial use or the bitmap information for terrestrial use based on the altitude threshold value.

### Supplementary Note 16

The user equipment according to any one of Supplementary Notes 10 to 15, wherein the type is an absolute position in a space,
the plurality of types of bitmap information include bitmap information corresponding to a first area in a space and bitmap information corresponding to a second area in a space,
the receiver receives a spatial threshold value from the network node, and
the user equipment further includes a controller that specifies either the bitmap information corresponding to the first area or the bitmap information corresponding to the second area based on the spatial threshold value.

### Supplementary Note 17

The user equipment according to any one of Supplementary Notes 10 to 16, wherein the plurality of types of bitmap information include at least bitmap information for aerial use and bitmap information for the user equipment that is not able to process the bitmap information for aerial use.

### Supplementary Note 18

The user equipment according to any one of Supplementary Notes 10 to 17, wherein the bitmap information is ssb-PositonInBurst.

### Supplementary Note 19

A communication method used by a network node that manages a cell in a mobile communication system, the communication method including:
configuring a plurality of synchronization signal blocks that can simultaneously be transmitted at different frequencies within a band of the cell, as synchronization signal blocks that differ depending on type; and
transmitting configuration information indicating the configuration.

### Supplementary Note 20

A communication method used by a user equipment that performs wireless communication with a network node that manages a cell in a mobile communication system, the communication method including:
receiving, from the network node, configuration information for configuring a plurality of synchronization signal blocks that can simultaneously be transmitted at different frequencies within a band of the cell, as synchronization signal blocks that differ depending on type.

### REFERENCE SIGNS

10: Network
20: RAN
30: CN
100: UE
110: Receiver
120: Transmitter
130: Controller
140: Wireless communicator
200: Base station
210: Transmitter
220: Receiver
230: Controller
240: NW communicator
250: Wireless communicator
300: CN apparatus

## Claims

1. A network node for managing a cell in a mobile communication system, the network node comprising:
a controller configured to configure a plurality of synchronization signal blocks that can simultaneously be transmitted at different frequencies within a band of the cell, as synchronization signal blocks that differ depending on type; and
a transmitter configured to transmit configuration information indicating the configuration.

2. The network node according to claim 1, wherein the configuration information comprises transmission frequency information indicating, for each synchronization signal block, information regarding the frequency of the synchronization signal block.

3. The network node according to claim 1, wherein
the type is an altitude,
the plurality of synchronization signal blocks comprise a synchronization signal block for aerial use and a synchronization signal block for terrestrial use, and
the transmitter transmits an altitude threshold value for specifying, in a user equipment, either the synchronization signal block for aerial use or the synchronization signal block for terrestrial use.

4. The network node according to claim 1, wherein
the type is an absolute position in a space,
the plurality of synchronization signal blocks comprise a synchronization signal block corresponding to a first area in a space and a synchronization signal block corresponding to a second area in a space, and
the transmitter transmits a spatial threshold value for specifying, in a user equipment, either the synchronization signal block corresponding to the first area or the synchronization signal block corresponding to the second area.

5. The network node according to claim 1, wherein the transmitter transmits a plurality of types of bitmap information that indicate whether to transmit the synchronization signal block at each transmittable timing of the synchronization signal block within one cycle period, the plurality of types of bitmap information differing for each frequency depending on the type.

6. The network node according to claim 5, wherein
the type is an altitude,
the plurality of types of bitmap information comprise bitmap information for aerial use and bitmap information for terrestrial use, and
the transmitter transmits an altitude threshold value for specifying either the bitmap information for aerial use or the bitmap information for terrestrial use.

7. The network node according to claim 5, wherein
the type is an absolute position in a space,
the plurality of types of bitmap information comprise bitmap information corresponding to a first area in a space and bitmap information corresponding to a second area in a space, and
the transmitter transmits a spatial threshold value for specifying either the bitmap information corresponding to the first area or the bitmap information corresponding to the second area.

8. The network node according to claim 5, wherein the plurality of types of bitmap information comprise at least bitmap information for aerial use and bitmap information for the user equipment that is not able to process the bitmap information for aerial use.

9. The network node according to claim 5, wherein the bitmap information is ssb-PositonInBurst.

10. A user equipment that performs wireless communication with a network node that manages a cell in a mobile communication system, the user equipment comprising a receiver configured to receive, from the network node, configuration information for configuring a plurality of synchronization signal blocks that can simultaneously be transmitted at different frequencies within a band of the cell, as synchronization signal blocks that differ depending on type.

11. The user equipment according to claim 10, wherein the configuration information comprises transmission frequency information indicating, for each synchronization signal block, information regarding the frequency of the synchronization signal block.

12. The user equipment according to claim 10, wherein
the type is an altitude,
the plurality of synchronization signal blocks comprise a synchronization signal block for aerial use and a synchronization signal block for terrestrial use,
the receiver receives an altitude threshold value from the network node, and
the user equipment further comprises a controller that specifies either the synchronization signal block for aerial use or the synchronization signal block for terrestrial use based on the altitude threshold value.

13. The user equipment according to claim 12, wherein
the type is an absolute position in a space,
the plurality of synchronization signal blocks comprise a synchronization signal block corresponding to a first area in a space and a synchronization signal block corresponding to a second area in a space,
the receiver receives a spatial threshold value from the network node, and
the user equipment further comprises a controller that specifies either the synchronization signal block corresponding to the first area or the synchronization signal block corresponding to the second area based on the spatial threshold value.

14. The user equipment according to claim 10, wherein the receiver receives, from the network node, a plurality of types of bitmap information that indicate whether to transmit the synchronization signal block at each transmittable timing of the synchronization signal block within one cycle period, the plurality of types of bitmap information differing for each frequency depending on the type.

15. The user equipment according to claim 14, wherein
the type is an altitude,
the plurality of types of bitmap information comprise bitmap information for aerial use and bitmap information for terrestrial use,
the receiver receives an altitude threshold value from the network node, and
the user equipment further comprises a controller that specifies either the bitmap information for aerial use or the bitmap information for terrestrial use based on the altitude threshold value.

16. The user equipment according to claim 14, wherein
the type is an absolute position in a space,
the plurality of types of bitmap information comprise bitmap information corresponding to a first area in a space and bitmap information corresponding to a second area in a space,
the receiver receives a spatial threshold value from the network node, and
the user equipment further comprises a controller that specifies either the bitmap information corresponding to the first area or the bitmap information corresponding to the second area based on the spatial threshold value.

17. The user equipment according to claim 14, wherein the plurality of types of bitmap information comprise at least bitmap information for aerial use and bitmap information for the user equipment that is not able to process the bitmap information for aerial use.

18. The user equipment according to claim 14, wherein the bitmap information is ssb-PositonInBurst.

19. A communication method used by a network node that manages a cell in a mobile communication system, the communication method comprising:
configuring a plurality of synchronization signal blocks that can simultaneously be transmitted at different frequencies within a band of the cell, as synchronization signal blocks that differ depending on type; and
transmitting configuration information indicating the configuration.

20. A communication method used by a user equipment that performs wireless communication with a network node that manages a cell in a mobile communication system, the communication method comprising:
receiving, from the network node, configuration information for configuring a plurality of synchronization signal blocks that can simultaneously be transmitted at different frequencies within a band of the cell, as synchronization signal blocks that differ depending on type.
